(19) Europäisches Patentamt
European Patent Office
Office européen des brevets

(11) **EP 4 186 867 A1**

(12) **EUROPEAN PATENT APPLICATION**
published in accordance with Art. 153(4) EPC

(43) Date of publication:
**31.05.2023 Bulletin 2023/22**

(21) Application number: **21846382.6**

(22) Date of filing: **19.07.2021**

(51) International Patent Classification (IPC):
**C01G 53/00** (2006.01)   **H01M 4/505** (2010.01)
**H01M 4/525** (2010.01)

(52) Cooperative Patent Classification (CPC):
**C01G 53/00; H01M 4/505; H01M 4/525;**
Y02E 60/10

(86) International application number:
**PCT/JP2021/026985**

(87) International publication number:
**WO 2022/019273 (27.01.2022 Gazette 2022/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:   **21.07.2020   JP 2020124702**

(71) Applicant: **SUMITOMO METAL MINING CO., LTD.**
**Tokyo**
**105-8716 (JP)**

(72) Inventor: **OZAWA, Shuuzou**
**Niihama-shi, Ehime 792-0002 (JP)**

(74) Representative: **Jones, Nicholas Andrew**
**Withers & Rogers LLP**
**2 London Bridge**
**London SE1 9RA (GB)**

(54) **METHOD FOR PRODUCING NICKEL-CONTAINING HYDROXIDE, METHOD FOR PRODUCING POSITIVE ELECTRODE ACTIVE MATERIAL FOR LITHIUM ION SECONDARY BATTERIES, POSITIVE ELECTRODE ACTIVE MATERIAL FOR LITHIUM ION SECONDARY BATTERIES, AND LITHIUM ION SECONDARY BATTERY**

(57)    A method of producing a nickel-containing hydroxide includes a pre-reaction aqueous solution preparation step of preparing a pre-reaction aqueous solution, and a crystallization step of obtaining the nickel-containing hydroxide by adding at least a nickel salt as a metal salt, a neutralizing agent that reacts with the metal salt to form a metal hydroxide, and a complexing agent to the pre-reaction aqueous solution while stirring the pre-reaction aqueous solution, wherein the pre-reaction aqueous solution contains water and the neutralizing agent, and a concentration of dissolved oxygen in the pre-reaction aqueous solution is 0.1 mg/L or less when the crystallization step starts.

FIG.1

**Description**

TECHNICAL FIELD

The present invention relates to a method of producing a nickel-containing hydroxide, a method of producing a positive electrode active material for a lithium-ion secondary battery, a positive electrode active material for a lithium-ion secondary battery, and a lithium-ion secondary battery.

BACKGROUND OF THE INVENTION

In recent years, with the rapid expansion of small electronic devices such as smartphones, tablet PCs and the like, demand for lithium-ion secondary batteries as chargeable and dischargeable power sources has grown rapidly. Composite oxides containing lithium-cobalt composite oxides and lithium-nickel composite oxides are used as positive electrode active materials for lithium-ion secondary batteries.

The above lithium-nickel composite oxide has advantage such as a high capacity compared to lithium-cobalt composite oxide, and the above lithium-nickel composite oxide has cost advantage because the lithium-nickel composite oxide uses nickel which is cheaper than cobalt. For this reason, the lithium-nickel composite oxide is expected to be a next-generation positive electrode material, and research and development on lithium-nickel composite oxide continues.

Various methods have been proposed for producing positive electrode active materials for lithium-ion secondary batteries such as lithium-cobalt composite oxide and lithium-nickel composite oxide. For example, a method of producing a positive electrode active material for lithium-ion secondary battery, that is produced by mixing a positive electrode active material precursor for lithium-ion secondary battery such as nickel composite hydroxide and the like with a lithium compound to obtain a mixture, followed by firing the mixture, has been proposed.

For example, Patent Document 1 discloses that in a method of producing a positive electrode active material for non-aqueous electrolyte secondary battery, the method includes: a crystallization step of adding an alkali solution to a mixed aqueous solution of a Ni salt and an M salt, coprecipitating a Ni and M hydroxide, filtering the resulting precipitate, washing the filtered resulting precipitate, and drying the resulting precipitate, to obtain a nickel composite hydroxide $Ni_xM_{1-x}(OH)_2$; a firing step of mixing the resulting nickel composite hydroxide $Ni_xM_{1-x}(OH)_2$ with a lithium compound so that a molar ratio of Li/(Ni+M) is in a range from 1.00 to 1.15, and firing the resultant mixture at a temperature in a range from 700°C to 1000°C; and a water-washing step of washing a resultant lithium-nickel composite oxide by water.

RELATED-ART DOCUMENT

Patent Document

Patent Document 1: Japanese Patent Application Laid-Open No. 2012-119093

SUMMARY OF THE INVENTION

Problems to be Solved by the Invention

However, in recent years, further performance improvement of lithium-ion secondary batteries is required. For example, a positive electrode active material for lithium-ion secondary batteries, which is resistant to crushing when producing electrodes and has excellent battery capacity when applied to lithium-ion secondary batteries, has been demanded. For this reason, there is a need for a dense positive electrode active material for lithium-ion secondary batteries that suppresses pores inside particles.

The powder characteristics of the positive electrode active material for lithium-ion secondary batteries are strongly affected by the powder characteristics of nickel-containing hydroxides, that are precursors. Therefore, there has been a demand for a method of producing nickel-containing hydroxides that can suppress porosity when used as a positive electrode active material for lithium-ion secondary batteries.

In view of the problems associated with the above conventional technique, one aspect of the present invention is to provide a method of producing nickel-containing hydroxides that can suppress porosity when used as a positive electrode active material for lithium-ion secondary batteries.

Means for Solving the Problems

According to one aspect of the present invention to solve the above problem, a method of producing a nickel-containing hydroxide includes a pre-reaction aqueous solution preparation step of preparing a pre-reaction aqueous solution, and a crystallization step of obtaining the nickel-containing hydroxide by adding at least a nickel salt as a metal salt, a neutralizing agent that reacts with the metal salt to form a metal hydroxide, and a complexing agent to the pre-reaction aqueous solution while stirring the pre-reaction aqueous solution, wherein the pre-reaction aqueous solution contains water and the neutralizing agent, and a concentration of dissolved oxygen in the pre-reaction aqueous solution is 0.1 mg/L or less when the crystallization step starts.

Effects of the Invention

According to one aspect of the present invention, when used as a positive electrode active material for lithium-ion secondary batteries, a method of producing nickel-containing hydroxides that can suppress porosity can be provided.

BRIEF DESCRIPTION OF THE DRAWINGS

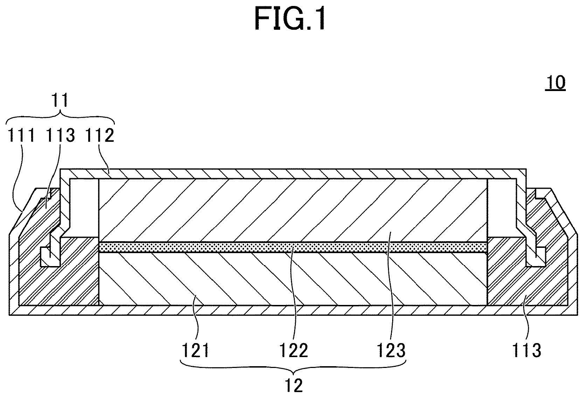

FIG. 1 is an explanatory view of a cross sectional configuration of a coin cell produced in Examples and Comparative examples.

DETAILED DESCRIPTION OF THE INVENTION

Hereafter, the embodiments for carrying out the invention are described, but the invention is not limited to the following embodiments and various modifications and substitutions can be made to the following embodiments without departing from the scope of the invention.

[Method of producing nickel-containing hydroxides]

An example of a method for producing nickel-containing hydroxides according to the present embodiment will be described.
The method of producing nickel-containing hydroxides of the present embodiment includes the following steps.
A pre-reaction aqueous solution preparation step is to prepare a pre-reaction aqueous solution.
A crystallization step is to obtain the nickel-containing hydroxide by adding at least a nickel salt as a metal salt, a neutralizing agent that reacts with the metal salt to form a metal hydroxide, and a complexing agent to the pre-reaction aqueous solution while stirring the pre-reaction aqueous solution.
The pre-reaction aqueous solution contains water and the neutralizing agent, and a concentration of dissolved oxygen in the pre-reaction aqueous solution is 0.1 mg/L or less when the crystallization step starts.
The inventor of the present invention intensively studied a method of producing a nickel-containing hydroxide that can suppress the porosity when used as a positive electrode active material (Hereafter, it is also referred to simply as "positive electrode active material") for lithium-ion secondary batteries.
Then, the inventor of the present invention found that the porosity of the positive electrode active material produced by the resulting nickel-containing hydroxides can be suppressed by reducing the concentration of the dissolved oxygen of the pre-reaction aqueous solution at the start of the crystallization step, that is, at the start of the nucleation reaction. The cause of the above is not clear, but the inventors of the present invention assume as follows.
When the concentration of dissolved oxygen in the pre-reaction aqueous solution at the start of the crystallization step is high, the precipitated nuclei combine with the oxygen and tend to form nuclei with a needle-like shape. Since the needle-shaped nucleus maintains its needle-shaped shape even as the nucleus grows, the portion derived from the nucleus of the needle-shaped nucleus in the nickel-containing hydroxide particles is less dense. Then, the portion with low density is considered to be voids when the nickel-containing hydroxide particles are used as the positive active material. Therefore, it is considered that suppressing the dissolved oxygen concentration of the pre-reaction aqueous solution just before the start of the crystallization step enables to suppress the formation of needle-shaped nuclei, which cause voids, and the voids can be suppressed when the active material is used as a positive electrode.
The steps involved in the method of producing nickel-containing hydroxides in the present embodiment are described below.

(1) A step of preparing a pre-reaction aqueous solution

In the step of preparing a pre-reaction aqueous solution, water or the like can be supplied into a stirring tank to prepare a pre-reaction aqueous solution. Specifically, for example, water and a neutralizing agent can be supplied into the stirring tank. The pre-reaction aqueous solution can also be supplied with a complexing agent if necessary.
When preparing the pre-reaction aqueous solution, the amount of each component added is not particularly limited. The pre-reaction aqueous solution is prepared so that a pH value of the pre-reaction aqueous solution is preferably in a range from pH 12.0 to pH 13.0 at a liquid temperature of 40°C.

The pre-reaction aqueous solution is preferably prepared so that the concentration of ammonium ions in the pre-reaction aqueous solution is in a range from 0 g/L to 15 g/L, and more preferably in a range from 5 g/L to 12 g/L. For example, the concentration of ammonium ion in the pre-reaction aqueous solution can be adjusted by controlling the amount of complexing agent added.

An alkaline aqueous solution can be used as a neutralizing agent, and an alkaline metal hydroxide aqueous solution containing one or more alkali metal hydroxides such as sodium hydroxide or potassium hydroxide, for example, can be used. As the neutralizing agent, an alkali compound, such as an alkali metal hydroxide, can be used instead of the alkaline aqueous solution without using the aqueous solution. However, because of the ease of controlling the pH of the pre-reaction aqueous solution, it is preferable to dissolve the neutralizing agent in water and use the neutralizing agent as an aqueous solution.

The complexing agent is not particularly limited, but an ammonium ion supplier can be preferably used as the complexing agent. For this reason, for example, one or more kinds selected from an ammonium carbonate solution, an ammonia solution, an ammonium chloride solution, and an ammonium sulfate solution can be preferably used as complexing agents.

As described above, according to the study by the inventor of the present invention, in order to suppress the porosity in the positive electrode active material, the concentration of dissolved oxygen in the pre-reaction aqueous solution at the start of the crystallization step is preferably suppressed to 0.1 mg/L or less.

For this reason, oxygen in the pre-reaction aqueous solution is preferably reduced or removed so that the concentration of dissolved oxygen is 0.1 mg/L or less.

There are no particular limitations on methods for reducing or removing oxygen in the pre-reaction aqueous solution. For example, one or more methods are selected from a method (a) of heating the pre-reaction aqueous solution, a method (b) of supplying and bubbling inert gas into the pre-reaction aqueous solution, and a method (c) of applying ultrasonic waves to the pre-reaction aqueous solution. The method of reducing or removing the oxygen in the pre-reaction aqueous solution is not limited to one method, and for example, a combination of two or more methods selected from the methods (a) to (c) above can be used. For example, the pre-reaction aqueous solution may be stirred while performing one or more methods selected from the methods (a) to (c) above.

In addition, in order to prevent oxygen from dissolving into the pre-reaction aqueous solution after reducing or removing oxygen in the pre-reaction aqueous solution, the atmosphere in the stirring tank containing the pre-reaction aqueous solution is preferably replaced with an inert atmosphere to reduce the oxygen concentration.

When the method (a) of heating the pre-reaction aqueous solution is used, the heating temperature, that is, the temperature of the pre-reaction aqueous solution after heating, is not particularly limited, but is preferably, for example, in a range from 30°C to 80°C, and more preferably in a range from 35°C to 70°C. Oxygen in the pre-reaction aqueous solution can be especially reduced or removed by setting the heating temperature to 30°C or higher. In addition, evaporation of water or the like in the pre-reaction aqueous solution can be suppressed and fluctuations in pH or the like can be suppressed by setting the heating temperature to 80°C or lower.

When the method (b) of supplying and bubbling an inert gas into the pre-reaction aqueous solution is used, the conditions of the methods are not particularly limited, and the method can be carried out while checking the concentration of dissolved oxygen in the pre-reaction aqueous solution. For example, the bubbling is preferably performed for 12 hours or longer and 48 hours or shorter, and more preferably 20 hours or longer and 36 hours or shorter. Oxygen in the pre-reaction aqueous solution can be especially reduced or removed by performing bubbling for 12 hours or longer. However, since the concentration of dissolved oxygen in the pre-reaction aqueous solution does not change significantly even if the reaction is carried out for an excessively long time, the bubbling is preferably performed 48 hours or shorter as described above.

When the inert gas is supplied to the pre-reaction aqueous solution and the gas is bubbled, the amount of blowing gas into the pre-reaction aqueous solution is not particularly limited. The amount of blowing gas into the pre-reaction aqueous solution is preferably 1.0 $Nm^3$/L or more with respect to the volume of the pre-reaction aqueous solution.

Although the type of inert gas to be blown into the pre-reaction aqueous solution is not particularly limited, nitrogen gas, for example, can be preferably used.

When the method (c) of applying ultrasonic waves to the pre-reaction aqueous solution is used, the time for applying ultrasonic waves is not particularly limited, and the concentration of dissolved oxygen in the pre-reaction aqueous solution can be adjusted while being checked.

In addition, as described above, the atmosphere in the stirring tank is preferably replaced with an inert atmosphere in order to prevent oxygen from dissolving into the pre-reaction aqueous solution.

For example, the inert gas is supplied to the stirring tank for a predetermined time to replace the atmosphere in the stirring tank. The time for supplying the inert gas into the stirring tank is not particularly limited, but the time for supplying the inert gas is preferably, for example, in a range from 12 hours to 48 hours, and more preferably in a range from 20 hours to 36 hours. Oxygen in the stirring tank can be reduced, and oxygen in the pre-reaction aqueous solution can be reduced or removed by supplying the inert gas for 12 hours or longer. However, since the concentration of dissolved oxygen in the stirring tank or in the pre-reaction aqueous solution does not change significantly even if the reaction is carried out for an excessively long time, the time for supplying the inert gas into the stirring tank is preferably 48 hours or shorter as described above. When the inert gas is supplied into the stirring tank to replace the atmosphere in the stirring tank, as long as the inert gas can be supplied into the stirring tank, the way of supplying the inert gas is not particularly limited. The inert gas for replacing the atmosphere in the stirring tank may be supplied, for example, to an area not occupied by the pre-reaction aqueous solution in the stirring tank. However, from the point of view of specifically reducing the dissolved oxygen in the pre-reaction aqueous solution, a gas to replace the atmosphere in the stirring tank can also be supplied into the pre-reaction aqueous solution.

When the inert gas is supplied to replace the atmosphere in the stirring tank, the amount of blowing gas into the stirring tank is not particularly limited. The amount of blowing gas into the stirring tank is preferably 0.5 $Nm^3/L$ or more with respect to the volume of the pre-reaction aqueous solution.

Although the inert gas supplied to the stirring tank is not particularly limited, nitrogen gas, for example, can be preferably used.

It is preferable that the concentration of dissolved oxygen of the water or neutralizing agent used in preparing the pre-reaction aqueous solution is suppressed in advance. For this reason, it is preferable that the concentration of dissolved oxygen of water and neutralizing agents is reduced or the dissolved oxygen is removed by one or more methods selected from the methods exemplified as methods for reducing or removing oxygen in the pre-reaction aqueous solution described above. In addition, it is preferable to similarly reduce the concentration of the dissolved oxygen or remove the dissolved oxygen of the metal salt aqueous solution or of the neutralizing agent used in the crystallization step described later.

The method for reducing or removing oxygen in the pre-reaction aqueous solution is preferably finished just before the crystallization step is started, and subsequently, the crystallization step is preferably conducted. It should be noted that the concentration of dissolved oxygen in the pre-reaction aqueous solution is measured before starting the crystallization step. The concentration is preferably 0.1 mg/L or less. If the concentration of dissolved oxygen is not below 0.1 mg/L, oxygen in the pre-reaction aqueous solution is preferably reduced or removed again.

When starting the crystallization step, a temperature (liquid temperature) of the pre-reaction aqueous solution is not particularly limited, but is preferably, for example, in a range from 20°C to 60°C, and more preferably in a range from 30°C and 50°C.

(2) Crystallization Step

The crystallization step of the method of producing nickel-containing hydroxides in the present embodiment can be performed in a batch type and can have a nucleation step that mainly performs nucleation and a particle growth step that grows particles (nuclei). The crystallization step is described below by dividing into the nucleation step and the particle growth step.

(2-1) Nucleation Step

In the nucleation step, an aqueous solution of metal salts, a neutralizing agent, and a complexing agent can be supplied and mixed in a stirring tank to form a reaction solution. When distinguishing from a reaction solution in the particle growth step that will be described later, the reaction solution in the nucleation step is referred to as a first reaction solution, and the reaction solution in the particle growth step is referred to as a second reaction solution.

The aqueous solution of metal salts may use an acidic aqueous solution of metal salts containing at least a nickel salt as the metal salt.

The aqueous solution of metal salts can be prepared, for example, by adding metal salts (metal compounds) to water. The metal salts used for the aqueous solution of metal salts are not particularly limited, but preferably water-soluble metal salts. Examples of the water-soluble metal salts include nitrates, sulfates, chlorides, and the like.

The nickel-containing hydroxide obtained by the method of producing the nickel-containing hydroxide of the present embodiment can also contain metal components other than nickel. Then, the composition ratio of the metal contained in the nickel-containing hydroxide obtained by the method of producing the nickel-containing hydroxide of the present embodiment is almost the same as the composition ratio of each metal contained in the aqueous solution of metal salts supplied to the stirring tank. For this reason, the proportion of metal compounds to be dissolved in water is preferably adjusted so that the composition ratio of each metal in the aqueous solution of metal salts supplied to the stirring tank is the same as a desired composition ratio of each metal in the desired nickel-containing hydroxide.

According to the method of producing a nickel-containing hydroxide of the present embodiment, for example, a nickel-containing hydroxide containing metallic elements other than nickel can be produced.

Manganese, for example, is particularly susceptible to binding with oxygen. For this reason, positive electrode active materials conventionally produced using nickel-containing hydroxides containing manganese are particularly prone to have voids in their particles. On the other hand, according to the method of producing the nickel-containing hydroxide of the present embodiment, the bonding with oxygen is suppressed, and even when the positive electrode active material is produced using the nickel-containing hydroxide containing manganese, the porosity in the particles of the positive electrode active material can be suppressed, and a particularly high effect can be exhibited. For this reason, the aqueous solution of metal salts preferably contains a manganese salt in addition to a nickel salt, and more preferably contains a nickel salt, a manganese salt, and a cobalt salt, for example.

In addition, according to the method of producing a nickel-containing hydroxide of the present embodiment, a nickel-containing hydroxide further containing one or more elements M selected from the metal group consisting of Mg, Ca, Al, Ti, V, Cr, Zr, Nb, Mo, and W can also be produced. For this reason, metal salts containing one or more metals selected from the above metal groups may be further added to the aqueous solution of metal salts depending on the composition of the desired nickel-containing hydroxide. One or more substances selected from, for example, titanium sulfate, ammonium peroxotitanate, potassium titanium oxalate, vanadium sulfate, ammonium vanadate, chromium sulfate, potassium chromate, zirconium sulfate, zirconium nitrate, niobium oxalate, ammonium molybdate, sodium tungstate, ammonium tungstate, and the like can be further added to the aqueous solution of metal salts.

By adding a manganese salt, a cobalt salt, or a metal salt containing one or more elements M selected from the above metal groups to the aqueous solution of metal salts as described above, the metal elements contained in the metal salts can be coprecipitated in an evenly dispersed state inside the particles of nickel-containing hydroxide. Therefore, even for metallic elements other than nickel, the nuclei of a nickel-containing hydroxide dispersed evenly in the particles can be obtained.

The total concentration of metal salts in the aqueous solution of metal salts is not particularly limited, and the total concentration can be suitably adjusted. For example, the total concentration of the metal salts of the above in the aqueous solution of metal salts is preferably in a range from 1.0 mol/L to 2.6 mol/L. In particular, the total concentration of the metal salts of the above in the aqueous solution of metal salts is preferably in a range from 1.5 mol/L to 2.2 mol/L.

This is because when the total concentration of the above metal salts in the aqueous solution of metal salts is 1.0 mol/L or more, the amount of crystallized products per a stirring tank can be sufficiently secured to enhance productivity. However, when the total concentration of the above metal salts in the aqueous solution of metal salts exceeds 2.6 mol/L, the concentration may exceed the saturation concentration at room temperature, and there is a risk that crystals will reprecipitate and clog pipes of an equipment. Therefore, the total concentration of the metal salts in the aqueous solution of metal salts is preferably 2.6 mol/L or less.

When a plurality of kinds of metal salts are used in preparing an aqueous solution of metal salts, it is not necessary to prepare one aqueous solution of metal salts. For example, if certain metal salts react with each other to produce unwanted compounds by mixing a plurality of kinds of metal salts, an aqueous solution of a metal salt can be prepared for each type of metal salt. Then, individually prepared aqueous solutions of metal salts may be simultaneously added to the pre-reaction aqueous solution or the reaction solution at a predetermined ratio. In this case, the concentration of the total metal salts in the individually added aqueous solutions of metal salts is preferably adjusted and added to the pre-reaction aqueous solution or the reaction solution within the range of the concentration of the aqueous solution of metal salts described above.

As for the neutralizing agent and complexing agent, the same ones described in the step of preparing the pre-reaction aqueous solution can be used. Therefore, the descriptions of the neutralizing agent and complexing agent are omitted.

In the nucleation step, the aforementioned aqueous solution of metal salts can be added while stirring the pre-reaction aqueous solution and the first reaction solution in the stirring tank by a stirring method.

The aqueous solution of metal salts is added to the pre-reaction aqueous solution, followed by mixing the mixture to prepare the first reaction solution, and fine nuclei of nickel-containing hydroxides are formed in the first reaction solution.

In the nucleation step, when the aqueous solution of metal salts is added to the pre-reaction aqueous solution to nucleate particles, the pH value and the concentration of ammonium ions in the first reaction solution change with the nucleation. For this reason, the aforementioned neutralizing agent and, if necessary, the aforementioned complexing agent can be added to the first reaction solution along with the aqueous solution of metal salts.

The pH value (pH set value) of the first reaction solution is preferably maintained in the same range as that of the aforementioned pre-reaction aqueous solution, that is, in the range from pH 12.0 to pH 13.0 at a liquid temperature of 40°C.

This is because by maintaining the pH value of the first reaction solution in the above range during the nucleation step, the generated nuclei do not appreciably grow and nucleation occurs preferentially.

In addition, in the nucleation step, the fluctuation range of the pH value of the first reaction solution is preferably suppressed from the viewpoint of producing nuclei of uniform size, and the fluctuation range of the pH value of the first reaction solution is preferably within the pH set value ± 0.1, and more preferably within the pH set value ± 0.05.

The concentration of ammonium ions in the first reaction solution (set value of ammonium ion concentration) is also preferably the same concentration as the aforementioned pre-reaction aqueous solution. That is, the concentration of ammonium ion in the first reaction solution is preferably adjusted to maintain the concentration in a range from 0 g/L to 15 g/L, and more preferably in a range from 5 g/L to 12 g/L.

In the nucleation step, it is preferable that the concentration of ammonium ions in the first reaction solution has a small fluctuation range, and it is more preferable that the concentration of ammonium ions in the first reaction solution is constant. This is because when the concentration of ammonium ions in the first reaction solution fluctuates, the solubility of metal ions in the aqueous solution fluctuates and the nucleation of uniform nickel-containing hydroxides may be inhibited.

In the nucleation step, the concentration of ammonium ions in the first reaction solution is, for example, preferably within the set value of concentration of ammonium ions ± 2.0 g/L, and more preferably within the set value of concentration of ammonium ions ± 1.0 g/L.

The aqueous solution of metal salts and if necessary, the neutralizing agent, and the complexing agent are supplied to the first reaction solution. This allows the first reaction solution to continuously generate new nuclei in the solution.

The method of adding the aqueous solution of metal salts, adding the neutralizing agent or complexing agent to the pre-reaction aqueous solution in the stirring tank, or adding the first reaction solution is not particularly limited, and these can be added by any method. For example, the pre-reaction aqueous solution or the first reaction solution can be added in such a way that the pH value of the first reaction solution is kept within a predetermined range by a quantification pump that is a pump capable of controlling flow rate of the pre-reaction aqueous solution or the first reaction solution while stirring the pre-reaction aqueous solution or the first reaction solution.

Although the temperature of the first reaction solution is not particularly limited, the temperature of the first reaction solution is preferably maintained in a range from 20°C to 60°C, and more preferably in a range from 30°C to 50°C during the nucleation step. This is because when the temperature of the first reaction solution is maintained in a range from 20°C to 60°C, the energy required to warm the first reaction solution while allowing the nucleation reaction to proceed sufficiently can be minimized, which is preferable.

When a predetermined amount of nuclei is produced in the first reaction solution, the nucleation step can be terminated. Whether a predetermined amount of nuclei has been produced can be determined by the amount of metal salts added to the first reaction solution.

The pH values and the concentrations of ammonium ions in the pre-reaction aqueous solution, the first reaction solution, and a second reaction solution that will be described later can be measured by a general pH meter and ion meter, respectively.

(2-2) Particle Growth Step

In the particle growth step, the pH value of the first reaction solution obtained in the nucleation step can be adjusted to a predetermined range. Then, the aqueous solution of metal salts can be added to the second reaction solution, which is the reaction solution obtained after pH adjustment. When the aqueous solution of metal salts is added to the second reaction solution, the neutralizing agent that adjusts and maintains the pH value and the concentration of ammonium ions in the second reaction solution, or if necessary the complexing agent, can be added.

In the particle growth step, the pH value of the second reaction solution is preferably in a range from pH 11.0 to pH 12.0 at 40°C. Therefore, when starting the particle growth step, the pH value of the second reaction solution at 40°C is preferably adjusted to be in a range from pH 11.0 to pH 12.0, and more preferably pH 11.0 or more and less than pH 12.0.

The solution used for adjusting the pH value of the first reaction solution at the end of the nucleation step to make the second reaction solution is not particularly limited, but an acidic material can be used, for example, sulfuric acid, hydrochloric acid, and the like, or an aqueous solution of the same. The parameters other than the pH of the second reaction solution before adding the aqueous solution of metal salts, that is, the parameters such as temperature (liquid temperature) and concentration of ammonium ions are within the range described in the nucleation step.

In the particle growth step, the aqueous solution of metal salts, neutralizing agent, complexing agent, and the like can be added to the second reaction solution after pH adjustment as described above.

In the particle growth step, the pH value (pH set value) of the second reaction solution is preferably in a range from pH 11.0 to pH 12.0, and more preferably pH 11.0 or more and less than 12.0 at 40°C. When the pH value of the second reaction solution is set to pH 12.0 or less, the particle growth reaction can proceed sufficiently and the impurity cation residue in the crystallized product can be especially suppressed. Moreover, when the pH value of the second reaction solution is set to pH 11.0 or more, the residue of impurity anions into the crystallized product can be especially suppressed, which is preferable.

Therefore, in the particle growth step, the nickel-containing hydroxide with low impurity residue can be obtained by setting the pH value of the second reaction solution within the above range while sufficiently promoting the particle growth reaction.

The method of controlling the value of the pH of the second reaction solution is not particularly limited, but can be controlled, for example, by adding a neutralizing agent to the second reaction solution and adjusting the amount of the neutralizing agent added.

In a lithium-ion secondary battery using a positive electrode active material for a lithium-ion secondary battery with a wide particle size distribution, the voltage applied to the particles in the electrode becomes uneven, and when charging and discharging are repeated, the particles of the positive electrode active material selectively deteriorate, resulting in a decrease in capacity. Usually, the particle size distribution of the positive electrode active material inherits the characteristics of the particle size distribution of the nickel-containing hydroxide used to produce the positive electrode active material. For this reason, the particle size distribution is preferably narrow even for the nickel-containing hydroxide obtained by the method of producing the nickel-containing hydroxide of the present embodiment, which can be used as a precursor of the positive electrode active material. According to the study of the inventor of the present invention, the width of the particle size distribution of the nickel-containing hydroxide obtained can be especially suppressed by suppressing the fluctuation range of the pH value of the second reaction solution in the particle growth step. Therefore, the fluctuation range of the pH value of the second reaction solution is preferably suppressed. For example, in the particle growth step, the fluctuation range of the pH value of the second reaction solution is preferably within the pH set value $\pm$ 0.1, and more preferably within the pH set value $\pm$ 0.05.

The concentration of ammonium ions in the second reaction solution (set value of concentration of ammonium ions) is also not particularly limited, but the concentration is preferably controlled to be maintained in a range from 0 g/L to 15 g/L, and more preferably in a range from 5 g/L to 12 g/L.

This is because the nuclei of nickel-containing hydroxides can be grown especially homogeneously when the concentration of ammonium ions in the second reaction solution is in a range from 0 g/L to 15 g/L.

In the particle growth step, it is preferable that the concentration of ammonium ions in the second reaction solution has a small fluctuation range, and it is more preferable that the concentration of ammonium ions in the second reaction solution is constant. This is because when the concentration of ammonium ions in the second reaction solution fluctuates, the solubility of metal ions in the aqueous solution fluctuates and the nucleation of uniform nickel-containing hydroxides may be inhibited.

In the particle growth step, the concentration of ammonium ions in the second reaction solution is, for example, preferably within the set value of concentration of ammonium ions $\pm$ 2.0 g/L, and more preferably within the set value of concentration of ammonium ions $\pm$ 1.0 g/L.

To control the concentration of ammonium ions in the second reaction solution, for example, within the above range, complexing agents can be added to the second reaction solution as needed, as described above.

Although the temperature of the second reaction solution is not particularly limited, the temperature of the second reaction solution is preferably maintained in a range from 20°C to 60°C, and more preferably in a range from 30°C to 50°C during the particle growth step. This is because when the temperature of the second reaction solution is maintained in a range from 20°C and 60°C, the energy required to warm the second reaction solution while allowing the growth of particles to proceed sufficiently can be minimized, which is preferable.

As described above, during the nucleation step and the particle growth step, that is, during the crystallization step, the temperature of the reaction solution is preferably maintained in a range from 20°C to 60°C, and more preferably in a range from 30°C and 50°C.

The materials of the aqueous solutions of metal salts, neutralizing agents, and complexing agents used in the particle growth step can be same as the materials already described in the step of preparing the pre-reaction aqueous solution or the nucleation step. Therefore, the explanation is omitted here.

In the nucleation step and the particle growth step, the aqueous solution of metal salts, the neutralizing agent, and the complexing agent may each have the same concentration and aqueous solution, but some or all of the aqueous solution of metal salts, the neutralizing agent, and the complexing agent may have different concentrations and/or aqueous solution. However, in the method of producing the nickel-containing hydroxide of the present embodiment, the composition ratio of nickel and each other metal in the resulting nickel-containing hydroxide is similar to that of each metal in the aqueous solution of metal salts. Therefore, the composition ratio of each metal in the aqueous solution of metal salts used in the particle growth step is the same as that in the nucleation step.

In the crystallization step of the method of producing a nickel-containing hydroxide in the present embodiment, it is preferable to use a batch-type crystallizer that does not recover the nickel-containing hydroxides as a product until the crystallization step is completed. That is, the crystallization step is preferably carried out by a batch-type crystallization method.

By using a type of reaction tank that does not recover the product until the crystallization process is completed, such as a batch-type reaction tank, the problem of growing particles being recovered simultaneously with the overflow liquid can be prevented, as in a continuous crystallizer that recovers the product by overflow in general. Therefore, particles with a particularly narrow particle size distribution and uniform particle size can be obtained.

An apparatus capable of controlling the atmosphere of a sealed apparatus or the like is preferably used because the step of preparing the pre-reaction aqueous solution or the crystallization step is preferably performed by suppressing oxygen contamination.

The method of producing a nickel-containing hydroxide in the present embodiment may have an optional step in addition to the above crystallization step. A configuration example of the optional step is described below.

(3) Coating Step

The method of producing the nickel-containing hydroxide in the present embodiment can also have a coating step in which the nickel-containing hydroxide obtained in the crystallization step is coated with an element M, which is an additive element.

The element M in this specification is not particularly limited. Examples of the element M include one or more kinds selected from the metal group consisting of Mg, Ca, Al, Ti, V, Cr, Zr, Nb, Mo, and W.

In the coating step, the specific method and conditions for coating the surface of nickel-containing hydroxide with element M are not particularly limited. In the coating step, either of the following methods (a) to (c) can be used as a method of coating the nickel-containing hydroxide with element M, for example.

(a) A method in which an aqueous solution containing the element M is added to a slurry in which nickel-containing hydroxide particles with a controlled pH are suspended to deposit the element M on the surface of the nickel-containing hydroxide particles (deposition method).

In the case that the coating step is carried out by the deposition method, when an aqueous solution containing element M is added to a slurry in which particles of nickel-containing hydroxide are suspended, it is preferable to control the pH of the above slurry so that the pH of the aqueous mixture of the above slurry and the aqueous solution containing element M is in a range from pH 5.5 to pH 8.0.

(b) A method of spray-drying slurry in which a nickel-containing hydroxide and a compound containing the element M are suspended (spray-drying method).
(c) A method of mixing a nickel-containing hydroxide with a compound containing the element M by a solid-phase method (solid-phase method).

There is no particular restriction on the aqueous solution containing the element M used in the above deposition method, but for example, an aqueous solution in which a compound containing the element M described in the nucleation step is dissolved in water can be used. In the coating step, an alkoxide solution containing the element M can be used instead of the aqueous solution containing the element M.

The compounds containing the element M used in the spray-drying method and the solid-phase method described above are not particularly limited, but metal salts containing one or more metals selected from the metal group of element M described in the nucleation step, for example, can be used.

When metal salts containing element M are added to the mixed aqueous solution in the nucleation step or the particle growth step as described above, and the particle surface of nickel-containing hydroxide is coated with element M in the coating step, the amount of metal salts containing element M added to the aqueous solution of metal salts in the nucleation step or the particle growth step is preferably reduced by the amount to be coated in the coating step. This is because by reducing the additive amount of the compound containing the element M to the aqueous solution of metal salts by the amount to be covered in the coating step, the mass ratio of the element M contained in the resulting nickel-containing hydroxide to the other metal components can be set to a desired value.

The coating step can also be carried out after the particle growth step is completed, for example, the coating step can also be performed after a drying step which will be described below.

(4) Cleaning process

The method of producing a nickel-containing hydroxide in the present embodiment can also have a cleaning step to clean the resulting nickel-containing hydroxide.

In the cleaning step, the slurry containing a nickel-containing hydroxide obtained in, for example, the aforementioned crystallization step or the coating step can be cleaned.

When the cleaning step is performed, the slurry containing a nickel-containing hydroxide can be filtered first (filtration step).

The filtered nickel-containing hydroxide can then be cleaned with water and filtered again (a water-washing and re-filtration step).

Filtration in the filtration step or in the water-washing and re-filtration step can be carried out by the method normally used, for example, filtration can be carried out by using a centrifuge, suction filtration machine, and the like.

In addition, water-washing in the water-washing and refiltration step can be carried out in the usual manner, as long as the excess salt contained in the nickel-containing hydroxide can be removed. As for the water used for water-washing, it is preferable to use water with as little impurity content as possible in order to prevent contamination of impurities, and it is more preferable to use pure water.

(5) Drying Step

The method of producing a nickel-containing hydroxide in the present embodiment can have a drying step.

In the drying step, specifically, for example, nickel-containing hydroxides washed in the cleaning step can be dried.

In the drying step, conditions for drying nickel-containing hydroxide are not particularly limited, but for example, when the drying temperature is set in a range from 100°C to 200°C, the cleaned nickel-containing hydroxide can be dried to obtain a nickel-containing hydroxide.

The atmosphere of the drying step is not particularly limited, but drying can be performed under a vacuum atmosphere, for example.

(Nickel-Containing Hydroxide Obtained by Method of Producing Nickel-Containing Hydroxide in the Present Embodiment)

The nickel-containing hydroxide obtained by the method of producing the nickel-containing hydroxide in the present embodiment will be described.

(1) Composition

The method of producing the nickel-containing hydroxide in the present embodiment, that is, the composition or the like of the nickel-containing hydroxide obtained by the crystallization step, for example, is not particularly limited. The nickel-containing hydroxide can be a nickel-containing hydroxide, preferably further containing manganese as described above. The nickel-containing hydroxide can also contain additional element M if necessary.

Therefore, the nickel-containing hydroxide contains, for example, nickel (Ni), manganese (Mn), cobalt (Co), and the element M (M) in the ratio of material amount, Ni: Mn: Co: M = 1-x-y-z: x: y: z, wherein x is $0.1 \leq x \leq 0.5$, y is $0 \leq y \leq 1/3$, z is $0 \leq z \leq 0.1$, and the relationship of $x \leq 1-x-y-z$ is preferably satisfied. The element M is not particularly limited, but may be one or more selected from the metal group consisting of, for example, Mg, Ca, Al, Ti, V, Cr, Zr, Nb, Mo, and W.

The nickel-containing hydroxide obtained by the method of producing the nickel-containing hydroxide in the present embodiment can be expressed by, for example, the general formula:

$$Ni_{1-x-y-z}Mn_xCo_yM_z(OH)_{2+\alpha}.$$

As the explanation of x, y, z, and element M has already been described, these descriptions are omitted here. A range of $\alpha$ is, for example,

$$-0.2 \leq \alpha \leq 0.2.$$

[Method of Producing Positive Electrode Active Material for Lithium-Ion Secondary Battery]

A configuration example of the method of producing the positive electrode active material for the lithium-ion secondary battery in the present embodiment (hereafter, it is also referred to simply as "method of producing positive electrode active material") is described below.

The method of producing the positive electrode active material in the present embodiment can have the following steps.

A mixing step is a step to mix a nickel-containing compound with a lithium compound to prepare a raw material mixture.

A firing step is a step to fire the raw material mixture.

As the nickel-containing compound to be used in the above mixing step, one or more kinds selected from the nickel-containing hydroxide obtained by the aforementioned method of producing a nickel-containing hydroxide and an oxidized roasted product of nickel-containing hydroxide can be used.

The steps of the method of producing the positive electrode active material in the present embodiment will be described below.

(1) Mixing Step

In the mixing step, a raw material mixture can be prepared by mixing a nickel-containing compound with a lithium compound.

As the nickel-containing compound, one or more kinds selected from the nickel-containing hydroxide obtained by the aforementioned method of producing the nickel-containing hydroxide and an oxidized roasted product of the nickel-containing hydroxide can be used.

In the mixing step, the nickel-containing compound and the lithium compound are preferably mixed so that the ratio of the amount of the lithium (Li) to a total amount of the metals other than lithium in the raw material mixture (Me) (ratio of Li/Me) is in a range from 0.95 to 1.10, and more preferably greater than 1.00 and 1.10 or less.

The ratio of Li/Me does not appreciably change before versus after the firing step described later. Therefore, the ratio of Li/Me in the raw material mixture used in the firing step becomes almost the same as the ratio of Li/Me in the obtained positive electrode active material. For this reason, it is preferable to mix such that the ratio of Li/Me in the raw material mixture prepared in the mixing step is the same as the ratio of Li/Me in the positive electrode active material to be obtained. Thus, for example, the ratio of Li/Me in the raw material mixture can be in a range from 0.95 to 1.10.

As mentioned above, the ratio of Li/Me in the raw material mixture is preferably greater than 1.00. The unreacted components in the resulting positive electrode active material can be suppressed by increasing the ratio of Li/Me to be greater than 1.00. Then, when the resulting positive electrode active material is applied to a lithium-ion secondary battery, the charge-discharge capacity can be increased.

In recent years, there has been a growing demand for positive electrode active materials that are resistant to particle crushing during repeated charging and discharging and have excellent cycling properties. According to the study of the inventor of the present invention, by increasing the ratio of Li/Me in the raw material mixture to be greater than 1.00, the positive electrode active material with particularly suppressed porosity can be obtained by sufficiently progressing the crystal growth in the later firing step. For this reason, a positive electrode active material that is resistant to particle crushing even after repeated charging and discharging and has excellent cycle characteristics can be achieved. Therefore, the ratio of Li/Me in the raw material mixture is more preferably greater than 1.00 and 1.10 or less, as described above.

The lithium compounds used to form the raw material mixture are not particularly limited, but one or more selected from, for example, lithium hydroxide, lithium nitrate, and lithium carbonate can be used. In particular, considering ease of handling and stability of quality, one or more lithium compounds selected from lithium hydroxide and lithium carbonate as lithium compounds is more preferably used.

In the mixing step, as a mixing means for mixing the nickel-containing compound with the lithium compound, a general mixer can be used, for example, a shaker mixer, a loedige mixer, a Julia mixer, a V blender, and the like.

(Baking Step)

The firing step is a step in which the raw material mixture obtained in the above mixing step is fired to form lithium metal composite oxide. When the raw material mixture is fired in the firing step, lithium in the lithium compound diffuses into the nickel-containing compound, thus forming a lithium-metal composite oxide.

In the firing step, the firing temperature at which the raw material mixture is fired is not particularly limited, but is preferably, for example, in a range from 600°C to 1150°C, and more preferably in a range from 700°C to 1100°C.

By setting the firing temperature to 600°C or higher, the diffusion of lithium into the nickel-containing compound can be sufficiently progressed to uniformly form the crystal structure of the resulting lithium-metal composite oxide. When the resulting product is used for the positive electrode active material, the battery characteristics can be especially enhanced, which is preferable. This is also because the reaction can sufficiently progress to prevent excess lithium from remaining and unreacted particles from remaining.

By setting the firing temperature to 1150°C or less, the progress of the firing between the particles of the formed lithium metal composite oxide can be suppressed. Furthermore, applying such firing temperature is also possible to suppress the generation of abnormal particular growth and to suppress the coarsening of the resulting particles of lithium metal composite oxide.

Although the rate of temperature rise to the firing temperature in the firing step is not particularly limited, it is preferable to raise the temperature to the above temperature by setting the rate of temperature rise to 3°C/min or more and 10°C/min or less from the viewpoint of ensuring uniform reaction between the nickel-containing compound and the lithium compound.

In addition, it is preferable that the reaction is kept at a temperature near the melting point of the lithium compound used for 1 hour or longer and 5 hours or shorter in the process of raising the temperature to the heat treatment temperature to make the reaction more uniform.

Of the firing time in the firing step, the holding time at a predetermined temperature, that is, the firing temperature described above, is not particularly limited, but is preferably 1 hour or longer, and more preferably 2 hours or longer. This is because when the holding time at the firing temperature is set at 1 hour or longer, the formation of lithium metal composite oxide can be sufficiently promoted and unreacted materials can be more reliably prevented from remaining.

The upper limit of the holding time at the firing temperature is not particularly limited, but it is preferable to be 24 hours or shorter in consideration of productivity and the like.

Although the conditions after the end of the holding time at the firing temperature are not particularly limited, when the raw material mixture is loaded into a sagger and fired, it is preferable to cool the atmosphere to 200°C or lower with a descent speed of 2°C/min or more and 10°C/min or less in order to prevent the sagger from deteriorating.

The atmosphere at the time of firing is not particularly limited, but the atmosphere is preferably an oxidizing atmosphere. As the oxidizing atmosphere, an oxygen-containing gas atmosphere can be preferably used, for example, an atmosphere having an oxygen concentration of 18% by volume or more and 100% by volume or less is more preferable.

This is because the crystallinity of the lithium-metal composite oxide can be particularly enhanced when the oxygen concentration in the atmosphere during firing is 18% by volume or more.

In the case of an oxygen-containing gas atmosphere, air, oxygen, a mixture of oxygen and inert gas, or the like can be used as the gas constituting the atmosphere.

When a mixture of oxygen and inert gas is used as a gas constituting an oxygen-containing gas atmosphere, for example, as described above, the oxygen concentration in the mixture preferably satisfies the above range.

In particular, the firing step is preferably carried out in an oxygen-containing gas stream and more preferably in the atmosphere or an oxygen stream. Especially considering the battery characteristics, the firing step is preferably performed in an oxygen stream.

The furnaces used for firing are not particularly limited and may be those capable of firing the raw material mixture in a predetermined atmosphere, but from the viewpoint of maintaining the atmosphere evenly in the furnace, electric furnaces without gas generation are preferably used and both batch-type and continuous-type furnaces can be used.

The lithium metal composite oxide particles obtained by the firing step may be agglomerated or slightly sintered. In this case, the agglomerates or sintered particles may be disintegrated to obtain the lithium metal composite oxide particles.

Here, disintegration is an operation in which mechanical energy is applied to an agglomerate formed from multiple secondary particles generated during firing by, for example, sintering necking between the secondary particles to separate the secondary particles with little destruction of the secondary particles themselves, thereby disintegrating the agglomerate.

When lithium hydroxide or lithium carbonate is used as the lithium compound, it is preferable to perform calcination before the firing step.

When the calcination is carried out, the calcination temperature is not particularly limited, but can be lower than the firing temperature in the firing step. The calcination temperature is, for example, preferably in a range from 250°C to 600°C, and more preferably in a range from 350°C to 550°C.

The calcination time, that is, the holding time at the above calcination temperature, is preferably in a range from 1 hour to 10 hours, for example, and more preferably in a range from 3 hours to 6 hours.

After the calcination, the calcined product can be cooled once and used for the firing step, or the calcined product can be continuously fired by raising the temperature from the calcination temperature to the firing temperature.

The atmosphere at the time of carrying out the calcination is not particularly limited, but can be the same as in, for example, the firing step.

The diffusion of lithium into the nickel-containing compound is sufficiently carried out by the calcination, and especially uniform lithium metal composite oxide particles can be obtained.

The method of producing the positive electrode active material in the present embodiment can have an optional step in addition to the mixing and firing steps described above. A configuration example of the optional step is described below.

(3) Roasting step

The method of producing the positive electrode active material in the present embodiment can also have a roasting step for roasting the nickel-containing hydroxide.

The roasting step can be performed after the crystallization step but before the mixing step. An oxidized roasted product of the nickel-containing hydroxide obtained in the roasting step can be used in the aforementioned mixing step.

In the roasting step, the nickel-containing hydroxide can be heat-treated, for example, water content in the nickel-containing hydroxide can be removed and at least a portion of the nickel-containing hydroxide can be made into an oxide.

As the nickel-containing hydroxide, the nickel-containing hydroxide obtained by the aforementioned method of producing the nickel-containing hydroxide can be used.

Although the heat treatment temperature in the roasting step is not particularly limited, the heat treatment temperature is preferably selected to remove the water content contained in the nickel-containing hydroxides by the heat treatment and to prevent the proportion of the amount of lithium and other metals in the final lithium-metal composite oxide from varying.

In the roasting step, heat treatment is preferably performed at a temperature higher than, for example, the drying temperature in the drying step of the aforementioned method of producing the nickel-containing hydroxide, and 600°C or lower. In particular, the heat treatment temperature is preferably in a range from 105°C to 600°C.

This is because, by setting the heat treatment temperature in the roasting step to 105°C or higher, excess water content in the nickel-containing hydroxide can be sufficiently removed to suppress variations in the proportion of lithium and other metals in the final lithium-metal composite oxide.

This is also because, by setting the heat treatment temperature to 600°C or lower, the sintering of particles by roasting can be suppressed, and the lithium-metal composite oxide with a more uniform particle size can be obtained.

All nickel-containing hydroxides are not necessarily converted into nickel-containing oxides, because the roasting step only needs to remove enough water content to prevent variations in the proportion of the amount of materials of metals such as lithium and the like in the final lithium metal composite oxide. However, in order to reduce the variation in the amount of metal in the resulting lithium-metal composite oxide, the heat treatment temperature is preferably set to 500°C or higher such that all the nickel-containing hydroxides are converted to nickel-containing oxides.

For this reason, the heat treatment temperature in the roasting step is more preferably, for example, in a range from 500°C to 600°C.

The metal components contained in the nickel-containing hydroxide after heat treatment at a prescribed heat treatment temperature in the roasting step may preferably be determined in advance by analysis, and the mixing ratio between the oxidized roasted product of the nickel-containing hydroxide and the lithium compound in the mixing step is preferably determined. In this way, by analyzing the ratio of each metal in the oxidized roasted product of the nickel-containing hydroxide obtained at a given heat treatment temperature and determining the optimum mixing ratio with the lithium compound, the variation in the proportion of the amount of lithium and other metals in the final lithium-metal composite oxide can be suppressed, which is preferable.

The atmosphere for heat treatment in the roasting step is not particularly limited and can be a non-reducing atmosphere, but the heat treatment in the roasting step is preferably performed in an air stream that can be easily performed.

In addition, the heat treatment time (roasting time) in the roasting step is not particularly limited, but the roasting time is preferably 1 hour or more and more preferably 2 hours or more, because the removal of excess water content of the nickel-containing hydroxide may not be sufficiently carried out within less than 1 hour. The upper limit of heat treatment time is not particularly limited, but 15 hours or shorter is preferable in consideration of productivity or the like.

An equipment used for roasting is not particularly limited, as long as the equipment can heat the nickel-containing hydroxide in a non-reducing atmosphere, preferably in an air stream, and an electric furnace without gas generation is suitably used.

[Positive Electrode Active Material for Lithium-Ion Secondary Battery]

An example of a configuration of a positive electrode active material for a lithium-ion secondary battery in the present embodiment will be described.

The positive electrode active material in the present embodiment can be produced by the method of producing the positive electrode active material described above. For this reason, some explanations of the matters already explained will be omitted.

(1) Porosity

The positive electrode active material in the present embodiment can contain lithium-metal composite oxide particles including lithium and nickel. The positive electrode active material of the present embodiment can also be composed of the above lithium-metal composite oxide particles. However, even in this case, the inclusion of unavoidable impurities is not excluded.

As for the positive electrode active material of the present embodiment, the porosity of the contained lithium-metal composite oxide particles is preferably 10% or less, more preferably 4% or less, and even more preferably 1% or less.

The positive electrode active material of the present embodiment can use the aforementioned nickel-containing hydroxide as a raw material. Therefore, the porosity of the lithium-metal composite oxide particles can be lowered, and as mentioned above, the porosity can be reduced to 10% or less.

In particular, the porosity of the lithium-metal composite oxide particles can be suppressed by mixing the nickel-containing compound and the lithium compound so that the ratio of Li/Me exceeds 1.00 to 1.10 or less in the aforementioned mixing step.

The porosity of lithium-metal composite oxide particles can be measured, for example, by observing an arbitrary cross-section of the lithium-metal composite oxide secondary particles using a scanning electron microscope (SEM) and performing image analysis. More specifically, multiple lithium-metal composite oxide secondary particles are embedded in resins or the like, and cross-section samples are prepared by cross-section polisher processing or the like, and cross-section observation of the secondary particles is performed by scanning electron microscopy. The obtained cross-sectional image of the secondary particles is subjected to image processing for any 20 or more secondary particles by an image analysis software (such as WinRoof 6.1.1), the voids (spaces) in the secondary particles are detected in black, and the dense parts within the contours of the secondary particles are detected in white. The porosity can be calculated by measuring the total areas of the area detected in black and the area detected in white of the above 20 or more secondary particles and calculating the area ratio of the area detected in black/(area detected in black + area detected in white). The porosity of the secondary particles to be evaluated can be calculated as described above, and the average value of the porosity of the secondary particles to be evaluated can be used as the porosity of the lithium-metal composite oxide particles contained in the positive electrode active material.

(2) Average Particle Size

The average particle size of the positive electrode active material in the present embodiment is preferably, for example, in a range from 3 um to 6 $\mu$m.

If the average particle size of the positive electrode active material in the present embodiment is 6 um or less, the particles have a sufficiently small average particle size, and the contact area with the electrolyte can be sufficiently enhanced when the particles are used as a material for the positive electrode of a lithium-ion secondary battery. Therefore, the positive electrode resistance of the lithium-ion secondary battery can be suppressed to improve the output characteristics.

The lower limit of the average particle size is not particularly limited, but the lower limit is preferably, for example, 3 um or more.

In this specification, the average particle size means the particle size at an accumulated volume value of 50% in the particle size distribution determined by the laser diffraction-scattering method, that is, D50. Hereafter, the average particle size in the specification means the same.

(3) Particle Size Distribution Index

In the above-mentioned method of producing nickel-containing hydroxides, the crystallization step can be carried out by a batch-type crystallization method. Therefore, the width of the particle size distribution of the resulting nickel-containing hydroxides can be narrowed compared to that produced by the continuous-type crystallization. The dispersion of the particle size distribution can also be suppressed for the positive electrode active material of the present embodiment using the nickel-containing hydroxide as a raw material.

For example, the positive electrode active material of the present embodiment preferably has a particle size distribution index calculated by the following formula (A), which is an index indicating dispersion of particle size distribution, in a range from 0.4 to 0.5.

$$\text{(Particle Size Distribution Index)} = [(\text{D90} - \text{D10})/\text{Volume Average Particle Size}] \cdot \cdot \cdot \text{(A)}$$

Note that D10 (cumulative 10% particle size) in formula (A) means the particle diameter at 10% of the accumulated volume value in the particle size distribution determined by the laser diffraction-scattering method.

In addition, D90 (cumulative 90% particle size) in formula (A) means the particle diameter at the accumulated volume value of 90% in the particle size distribution determined by the laser diffraction-scattering method.

The volume average particle size in formula (A) above is the average particle size weighted by the particle volume, and in a collection of the particles, the sum of the diameters of individual particles multiplied by the volume of the particles is divided by the total volume of the particles. The volume average particle size can be measured, for example, by the laser diffraction-scattering method using a laser diffraction-type particle size distribution meter.

If the particle size distribution of the positive electrode active material used for the positive electrode of a lithium-ion secondary battery is large, fine particles or coarse particles are present. Then, for example, when a positive electrode is fabricated using a positive electrode active material that contains many fine particles, the fine particles may selectively deteriorate, lowering the capacity of the lithium-ion secondary battery, that is, lowering the cycle characteristics.

When the particle size distribution index of the positive electrode active material is 0.5 or less, it means that the spread of the particle size distribution of the positive electrode active material is sufficiently narrow. By suppressing the spread of the particle size distribution of the positive electrode active material, the cycle characteristics of the lithium-ion secondary battery can be enhanced when the positive electrode active material is used in the lithium-ion secondary battery.

However, as the variation in particle size is difficult to completely suppress, the particle size distribution index of the positive electrode active material can be, for example, 0.4 or more.

(4) Composition

The composition and the like of the positive electrode active material of the present embodiment are not particularly limited. For example, lithium and nickel can be contained in the composition.

Also, as mentioned above, manganese combines particularly easily with oxygen, and conventionally, positive electrode active materials containing manganese are particularly prone to voids in their particles. On the other hand, according to the positive electrode active material of the present embodiment, bonding with oxygen can be suppressed, and the porosity in the particles of the positive electrode active material can be suppressed, even when the positive electrode active material containing manganese is used, and a particularly high effect can be exhibited. Therefore, the positive electrode active material of the present embodiment can contain, for example, lithium, nickel, and manganese. Furthermore, the positive electrode active material of the present embodiment can also contain lithium, nickel, manganese, and cobalt.

The positive electrode active material in the present embodiment can contain, for example, lithium (Li), nickel (Ni), manganese (Mn), and cobalt (Co). Furthermore, the positive electrode active material in the present embodiment further can contain element M (M). Then, each of the above elements can be contained in the ratio of material amount in the ratio of Li: Ni: Mn: Co: M = a:1-x-y-z:x:y:z.

a is $0.95 \leq a \leq 1.10$, x is $0.1 \leq x \leq 0.5$, y is $0 \leq y \leq 1/3$, and z is $0 \leq z \leq 0.1$, and the relationship of $x \leq 1-x-y-z$ can be satisfied. The element M is not particularly limited, but may be one or more selected from the metal group consisting of, for example, Mg, Ca, Al, Ti, V, Cr, Zr, Nb, Mo, and W. a is more preferably $1.00 < a \leq 1.10$ from the viewpoint of particularly suppressing the porosity and fabricating a positive electrode active material with excellent cycle characteristics in which the particles are particularly resistant to crushing even after repeated charge-discharge cycles.

The positive electrode active material in the present embodiment can be represented by, for example, the general formula: $Li_aNi_{1-x-y-z}Mn_xCo_yM_zO_{2+\beta}$.

As the descriptions of a, x, y, z, and element M have already been explained, their descriptions are omitted here. $\beta$ can be, for example, $-0.2 \leq \beta \leq 0.2$.

[Lithium-ion Secondary Battery]

The lithium-ion secondary battery (hereafter also referred to as "secondary battery".) of the present embodiment can have a positive electrode containing the aforementioned positive electrode active material.

Hereafter, a configuration example of the secondary battery of the present embodiment will be described for each component. The secondary battery of the present embodiment includes, for example, a positive electrode, a negative electrode, and a non-aqueous electrolyte, and is composed of the same components as those of a general lithium-ion secondary battery. Note that the embodiment described below is only an example, and the lithium-ion secondary battery of the present embodiment can be implemented in various modified and improved forms based on the knowledge of a person skilled in the art, including the following embodiment. Further, the use of secondary batteries is not particularly limited.

(Positive Electrode)

The positive electrode of the secondary battery in the present embodiment can contain the aforementioned positive electrode active material.

An example of the method of producing the positive electrode is described below. First, the positive electrode active material (in powder form), a conductive material, and a binding agent (binder) described above are mixed together to form a positive electrode mixture, and then an activated carbon or a desired solvent such as a viscosity adjustment is added as needed, which can be kneaded to form a positive electrode mixture paste.

The mixing ratio of each material in the positive electrode mixture is a factor in determining the performance of lithium-ion secondary batteries and can therefore be adjusted according to the application. The mixing ratio of the materials can be the same as that of the positive electrode of a known lithium-ion secondary battery. For example, if the total mass of the solid content of the positive electrode mixture, excluding the solvent, is 100% by mass, the mixture can contain a range from 60% by mass to 95% by mass of the positive electrode active material, a range from 1% by mass to 20% by mass of the conductive material, and a range from 1% by mass to 20% by mass of the binding agent.

The obtained positive electrode mixture paste is applied to the surface of a current collector made of, for example, aluminum foil, and dried to disperse the solvent to produce a sheet-like positive electrode. If necessary, the electrode can be pressurized by a roll press or the like to increase the electrode density. The sheet-like positive electrode thus obtained can be cut and the like, into an appropriate size according to the desired battery and used for producing the battery.

Examples of the conductive materials include graphite (natural graphite, artificial graphite, expanded graphite, and the like), carbon black materials such as acetylene black and Ketjen black (Registered Trademark), and the like.

The binding agent (binder) plays a role to hold active material particles together. Examples of the binding agents include one or more kinds selected from polyvinylidene fluoride (PVDF), polytetrafluoroethylene (PTFE), fluoro-rubber, ethylene propylene diene rubber, styrene butadiene, cellulosic resin, polyacrylic acid, and the like.

If necessary, a solvent that dissolves the binding agent can be added to the positive electrode mixture by dispersing the positive electrode active material, conductive material, and the like. Specifically, an organic solvent such as N-methyl-2 pyrrolidone and the like can be used as the solvent. Activated carbon can also be added to the positive electrode mixture to increase an electric double layer capacity.

The method of producing the positive electrode is not limited to the example described above, and other methods may be used. For example, the positive electrode can be produced by press-forming the positive electrode mixture and then drying it under a vacuum atmosphere.

(Negative Electrode)

Metallic lithium, a lithium alloy or the like can be used for the negative electrode. The negative electrode may be formed by mixing the negative electrode active material, which can intercalate and de-intercalate lithium ions, with a binding agent, adding an appropriate solvent to form a negative electrode mixture paste, applying the paste on the surface of a metal foil current collector such as copper, followed by drying, and compressing the coated current collector to increase electrode density as needed.

Examples of the negative electrode active materials include fired organic compounds such as natural graphite, artificial graphite, phenolic resin, and the like, and powdered carbon materials such as coke and the like. In this case, a fluorine-containing resin such as PVDF can be used as the negative electrode binder similarly as in the positive electrode, and an organic solvent such as N-methyl-2-pyrrolidone can be used as the solvent to disperse these active materials and the binding agent.

(Separator)

Separators can be inserted between the positive and negative electrodes as needed. The separator separates the positive electrode from the negative electrode and holds the electrolyte, and known separators can be used. For example, a thin membrane such as polyethylene or polypropylene with many minute pores can be used.

(Non-aqueous Electrolytes)

As the non-aqueous electrolyte, for example, a non-aqueous electrolytic solution can be used.

As the non-aqueous electrolytic solutions, a solution in which a lithium salt as a supporting salt is dissolved in an organic solvent can be used. The lithium salt dissolved in an ionic liquid may be used as the non-aqueous electrolytic solution. The ionic liquid is a salt that is composed of cations other than lithium ions and anions and remains liquid even at room temperature.

As the organic solvent, one kind selected from cyclic carbonates such as ethylene carbonate, propylene carbonate, butylene carbonate, trifluoropropylene carbonate, and the like; chain carbonates such as diethyl carbonate, dimethyl carbonate, ethyl methyl carbonate, dipropyl carbonate, and the like; ether compounds such as tetrahydrofuran, 2-methyltetrahydrofuran, dimethoxyethane, and the like; sulfur compounds such as ethyl methyl sulfone, butane sultone, and the like; and phosphorous compounds such as triethyl phosphate, trioctyl phosphate, and the like; and the like may be used alone, or a mixture of two or more kinds may be used.

Examples of the supporting salts include $LiPF_6$, $LiBF_4$, $LiClO_4$, $LiAsF_6$, $LiN(CF_3SO_2)_2$, and their composite salts. In addition, the non-aqueous electrolytic solution may contain radical scavengers, surfactants, flame retardants, and the like.

A solid electrolyte may also be used as the non-aqueous electrolyte. The solid electrolytes have properties that can withstand high voltages. Examples of the solid electrolytes include inorganic solid electrolytes and organic solid electrolytes.

Examples of the inorganic solid electrolytes include oxide-based solid electrolytes, sulfide-based solid electrolytes, and the like.

The oxide-based solid electrolyte is not particularly limited. For example, the oxide-based solid electrolyte containing, for example, oxygen (O) and having lithium-ion conductivity and electronic insulation can be suitably used. Examples of oxide-based solid electrolytes include one or more kinds selected from lithium phosphate ($Li_3PO_4$), $Li_3PO_4N_X$, $LiBO_2N_X$, $LiNbO_3$, $LiTaO_3$, $Li_2SiO_3$, $Li_4SiO_4\text{-}Li_3PO_4$, $Li_4SiO_4\text{-}Li_3VO_4$, $Li_2O\text{-}B_2O_3\text{-}P_2O_5$, $Li_2O\text{-}SiO_2$, $Li_2O\text{-}B_2O_3\text{-}ZnO$, $Li_{1+X}Al_XTi_{2-X}(PO_4)_3$, $(0{\leq}X{\leq}1)$, $Li_{1+X}Al_XGe_{2-X}(PO_4)_3$ $(0{\leq}X{\leq}1)$, $LiTi_2(PO_4)_3$, $Li_{3X}La_{2/3-X}TiO_3$ $(0{\leq}X{\leq}2/3)$, $Li_5La_3Ta_2O_{12}$, $Li_7La_3Zr_2O_{12}$, $Li_6BaLa_2Ta_2O_{12}$, $Li_{3.6}Si_{0.6}P_{0.4}O_4$, and the like.

The sulfide-based solid electrolyte is not particularly limited. For example, the sulfide-based solid electrolyte containing sulfur (S) and having lithium-ion conductivity and electronic insulation can be suitably used. Examples of the sulfide-based solid electrolytes include one or more kinds selected from $Li_2S\text{-}P_2S_5$, $Li_2S\text{-}SiS_2$, $LiI\text{-}Li_2S\text{-}SiS_2$, $LiI\text{-}Li_2S\text{-}P_2S_5$, $LiI\text{-}Li_2S\text{-}B_2S_3$, $Li_3PO_4\text{-}Li_2S\text{-}Si_2S$, $Li_3PO_4\text{-}Li_2S\text{-}SiS_2$, $LiPO_4\text{-}Li_2S\text{-}SiS$, $LiI\text{-}Li_2S\text{-}SiS$, $LiI\text{-}Li_2S\text{-}P_2O_5$, $LiI\text{-}Li_3PO_4\text{-}P_2S_5$, and the like.

As the inorganic solid electrolyte, one other than the above may be used, for example, $Li_3N$, $LiI$, $Li_3N\text{-}LiI\text{-}LiOH$, and the like.

The organic solid electrolyte is not particularly limited as long as the organic solid electrolyte is a polymer compound exhibiting ionic conductivity. Examples of the organic solid electrolytes include polyethylene oxide, polypropylene oxide, a copolymer of these, and the like. The organic solid electrolyte may also contain a supporting salt (lithium salt).

(Shape and Configuration of Secondary Battery)

The lithium-ion secondary battery of the present embodiment described above can be formed in various shapes such as cylindrical or laminated. Regardless of the shape, if the secondary battery of the present embodiment uses a non-aqueous electrolytic solution as the non-aqueous electrolyte, the positive and negative electrodes can be laminated through a separator to form an electrode body, and the obtained electrode body can be impregnated with the non-aqueous electrolytic solution. Then, the positive electrode current collector and the positive electrode terminal that is connected to the outside are connected, and the negative electrode current collector and the negative electrode terminal that is connected to the outside are connected, using current collection leads or other means, and sealing in the battery case, the structure is realized.

As described above, the secondary battery of the present embodiment is not limited to a form using a non-aqueous electrolytic solution as a non-aqueous electrolyte, but for example, a secondary battery using a solid non-aqueous electrolyte, that is, an all-solid-state battery, can also be used. In the case of an all-solid-state battery, the configuration other than the positive active material can be changed as necessary.

EXAMPLES

Examples of the present invention will be explained more specifically in comparison with Comparative Examples below, but the present invention is not limited in any way by these Examples.

Here, the evaluation method of nickel-containing hydroxides and positive electrode active materials obtained in the following Examples and Comparative Examples will be explained.

(Evaluation Method)

(1) Evaluation of Nickel-Containing Hydroxides

(1-1) Composition

The composition of the nickel-containing hydroxides was analyzed using an ICP emission spectrometer (ICPE-9000, manufactured by Shimadzu Corporation).

(2) Evaluation of Positive Electrode Active Materials (2-1) Composition

The composition of the positive electrode active cathode materials was analyzed using an ICP emission spectrometer (ICPE-9000, manufactured by Shimadzu Corporation).

(2-2) Average Particle Size

D50 which is the average particle size of the positive electrode active material was calculated using a laser light diffraction-scattering particle size analyzer (Microtrack MT3300EXII, manufactured by Microtrack Bell Corporation).

(2-3) Particle Size Distribution Index

The particle size distribution was measured by using a laser light diffraction-scattering particle size analyzer (Microtrack MT3300EXII, manufactured by Microtrack Bell Corporation), and D10, D90, and volume average particle size were calculated. Then, the particle size distribution index was calculated by the following formula (A) .

$$(Particle\ Size\ Distribution\ Index)\ =\ [(D90-D10)/Volume\ Average\ Particle\ Size]\ \cdot\cdot\cdot\ (A)$$

(2-4) Porosity

The obtained lithium-metal composite oxide particles contained in the positive electrode active material were embedded in a resin, cross-section samples were prepared by cross-section polisher processing, and cross-section observation of the secondary particles was performed by scanning electron microscopy (S-4700, manufactured by Hitachi High Technologies, Ltd.). The obtained cross-section images of the secondary particles were taken by an image analysis software (WinRoof 6.1.1) at a magnification of 5000 times, and for any 100 secondary particles, the voids in the secondary particles (voids) were detected in black, and the dense areas within the contours of the secondary particles were detected in white. The porosity was then calculated by measuring the total area of the area detected in black and the area detected in white of the calculated secondary particles and calculating the area ratio according to the formula of (area detected in black/(area detected in black + area detected in white)). The porosity of the secondary particles to be evaluated was obtained as described above, and the calculated average value of the porosity of the 100 secondary particles was used as the porosity of the lithium-metal composite oxide particles contained in the positive electrode active material.

(2-5) Resistance to particle crush (Average Crushing Strength)

Crushability of particles of the obtained lithium transition metal composite oxide was evaluated as follows. Using a microcompression testing machine (manufactured by Shimadzu Corporation), 20 secondary particles with a particle size of about 5 um were selected, and the crushing strength of each particle was measured, and the average value was calculated as the average crushing strength, which was used as an index of the crushing susceptibility of the particles. Particles with larger average crushing strength are less likely to be crushed.

(3) Lithium-Ion Secondary Battery

(3-1) Initial Discharge Capacity

A 2032-type coin cell battery was produced using the positive electrode active material obtained in the following Examples and Comparative Examples, and the initial discharge capacity was evaluated.
The configuration of the coin-type cell battery manufactured as illustrated in FIG. 1 will be described. FIG. 1 indicates a schematic cross-section of the manufactured coin-type cell battery.
As illustrated in FIG. 1, the manufactured coin-type cell battery 10 is configured by a case 11 and electrodes 12 housed in the case 11.
The case 11 has a positive electrode can 111, which is hollow and has one end open, and a negative electrode can 112, which is placed in the opening of the positive electrode can 111, and when the negative electrode can 112 is placed in the opening of the positive electrode can 111, a space to accommodate the electrode 12 is formed between the negative electrode can 112 and the positive electrode can 111.
The electrode 12 consists of a positive electrode 121, a separator 122, and a negative electrode 123, which are laminated in this order, and housed in the case 11 so that the positive electrode 121 contacts the inner surface of the positive electrode can 111 and the negative electrode 123 contacts the inner surface of the negative electrode can 112.
The case 11 is equipped with a gasket 113, and is fixed by the gasket 113 so that the positive electrode can 111 and the negative electrode can 112 remain electrically insulated. The gasket 113 also has a function of sealing the gap between the positive electrode can 111 and the negative electrode can 112 to seal the inside of the case 11 and the outside in an airtight liquid-tight manner.

The coin-type cell battery 10 was fabricated as follows. First, 52.5 mg of the positive electrode active material, 15 mg of acetylene black, and 7.5 mg of polytetrafluoroethylene resin (PTFE) were mixed with N-methyl-2 pyrrolidone as a solvent, and pressed to a diameter of 11 mm and a thickness of 100 um at a pressure of 100 MPa to fabricate the positive electrode 121. The fabricated positive electrode 121 was dried in a vacuum dryer at 120°C for 12 hours. Using the positive electrode 121, the negative electrode 123, the separator 122, and the electrolytic solution, the coin-type cell battery 10 was fabricated in an Ar atmosphere glove box with a controlled dew point of -80°C.

For the negative electrode 123, the negative electrode mixture paste, in which graphite powder with an average particle size of about 20 $\mu$m and polyvinylidene fluoride were mixed with N-methyl-2 pyrrolidone as a solvent, was applied to a copper foil and was dried to form a negative electrode sheet punched into a disk-shape with a diameter of 14 mm. A porous polyethylene membrane with a thickness of 25 um was used as the separator 122. The electrolytic solution used was a mixture of equal parts of ethylene carbonate (EC) and diethyl carbonate (DEC) with 1M of $LiClO_4$ as the supporting electrolyte (manufactured by Toyama Pharmaceutical Co., Ltd.).

The initial discharge capacity of the obtained coin-type cell battery 10 was measured as follows.

The initial discharge capacity was defined as the capacity when the coin-type cell battery 10 was left for about 24 hours after the coin-type cell battery was manufactured, charged to a cutoff voltage of 4.65 V with a current density of 0.05 C for the positive electrode after the open circuit voltage (OCV) was stabilized, and discharged to a cutoff voltage of 2.35 V after resting for 1 hour.

(3-2) Capacity Retention Rate after 10 Cycles

A 2032-type coin cell battery was manufactured by the same method as the initial discharge capacity measurement. The coin-type cell battery 10 was left for about 24 hours after the coin-type cell battery 10 was manufactured, charged to a cutoff voltage of 4.65 V with a current density of 0.05 C for the positive electrode after the open circuit voltage (OCV) was stabilized, and discharged to a cutoff voltage of 2.35 V after resting for 1 hour. The cycle of charge and discharge was repeated 10 times thereafter, and the ratio of the capacity of the 10th discharge to the capacity of the 1st discharge was measured as the capacity retention rate (%).

(Experimental Conditions)

The experimental conditions for nickel-containing hydroxides and positive electrode active materials in each of the following experimental examples are explained.

[Example 1]

A nickel-containing hydroxide and a positive electrode active material were prepared by the following procedure.

(1) A step of preparing a pre-reaction aqueous solution

A 15.136 L of pre-reaction aqueous solution was prepared by supplying 15 L of water and 136 mL of a sodium hydroxide aqueous solution as a neutralizing agent into a stirring tank.

Then, nitrogen gas was fed into the solution of the pre-reaction aqueous solution at a flow rate of 0.02 m³/min for 24 hours while stirring the pre-reaction aqueous solution with a stirring blade until the crystallization step was started, and bubbling was performed.

In addition, nitrogen gas was fed at a flow rate of 0.01 m³/min for 24 hours into the space not occupied by the pre-reaction aqueous solution in the stirring tank, and the atmosphere in the stirring tank was also replaced by a nitrogen atmosphere. The above nitrogen gas fed into the stirring tank was supplied toward the liquid level of the pre-reaction aqueous solution. Even after the start of the following crystallization step, nitrogen gas was continuously fed into the stirring tank to maintain the nitrogen atmosphere.

The pre-reaction aqueous solution just before starting the following crystallization step had a pH value (at 40°C) of 12.3, a temperature of 40°C, and a dissolved oxygen concentration of 0.1 mg/L or less. The dissolved oxygen concentration in the pre-reaction aqueous solution was measured by a digital dissolved oxygen meter (DO-5510, manufactured by FUSO). The same apparatus is used to measure the dissolved oxygen concentration in the following other Examples and Comparative Examples.

(2) Crystallization Step

An aqueous solution of metal salt, an aqueous solution of sodium hydroxide as a neutralizing agent, and an aqueous solution of ammonia as a complexing agent were fed into a stirring tank and mixed to form a reaction solution, and a nickel-containing hydroxide were obtained by a batch-type crystallization step. During the crystallization step, the reaction solution was stirred with a stirring blade.

The crystallization step was divided into a nucleation step and a particle growth step.

(2-1) Nucleation Step

In the nucleation step, a metal salt aqueous solution was added to the pre-reaction aqueous solution to form a reaction solution. During the nucleation step, an aqueous sodium hydroxide solution as a neutralizing agent and an aqueous ammonia solution as a complexing agent were also supplied to the stirring tank, and the pH value of the aqueous reaction solution (at 40°C) was maintained at 12.3, the ammonia concentration was maintained at 12 g/L, and the temperature of the aqueous reaction solution was maintained at 40°C.

The metal salt aqueous solution was prepared in advance by adding nickel sulfate, manganese sulfate, and cobalt sulfate to pure water so that the solute concentration, that is, the metal salt concentration, was to be 2 mol/L and the composition of the resulting nickel-containing hydroxide was $Ni_{0.5}Mn_{0.3}Co_{0.2}(OH)_2$. The metal salt aqueous solution was prepared so that the ratio of the amounts of nickel, manganese, and cobalt in the metal salt aqueous solution was to be the above composition.

(2-2) Particle Growth Step

After completing the nucleation step and before starting the particle growth step, the pH value was adjusted to 11.2 by adding sulfuric acid to the reaction solution.

In the particle growth step, the same metal salt aqueous solution was added to the reaction solution as in the nucleation step. During the nucleation step, an aqueous sodium hydroxide solution as a neutralizing agent and an aqueous ammonia solution as a complexing agent were also supplied to the stirring tank, and the pH value of the aqueous reaction solution (at 40°C) was maintained at 11.2, the ammonia concentration was maintained at 12 g/L, and the temperature of the aqueous reaction solution was maintained at 40°C.

After the particle growth step, the nickel-containing hydroxide was collected, cleaned with water, filtered, and dried to obtain the nickel-containing hydroxide.

The composition of the nickel-containing hydroxide obtained was confirmed to be $Ni_{0.5}Mn_{0.3}Co_{0.2}(OH)_2$ by evaluating the aforementioned composition.

(Mixing Step)

Nickel-containing hydroxide obtained in the crystallization step and lithium hydroxide were mixed so that the ratio of Li/Me, which is the ratio of the amounts of lithium (Li) to the amounts of metals (Me) other than lithium in the raw material mixture, was to be 1.0 to prepare the raw material mixture. The mixing was performed using a shaker mixer device (TURBULA Type T2C, manufactured by Willy A. Bachofen (WAB)).

(Firing Step)

The raw material mixture obtained in the mixing step was fired at 975°C for 3 hours under an oxygen-containing atmosphere in which the oxygen concentration was 87% by volume and the remainder was nitrogen, then cooled and crushed to obtain the positive electrode active material.

The obtained positive electrode active material was evaluated as described above. As a result, the composition was $Li_{1.0}Ni_{0.5}Mn_{0.3}Co_{0.2}O_2$. Other evaluation results are shown in Table 1.

[Example 2]

In the step of preparing a pre-reaction aqueous solution, bubbling was performed by increasing the temperature of the pre-reaction aqueous solution to 70°C and supplying nitrogen gas at a flow rate of 0.02 $m^3$/min for 24 hours while stirring the pre-reaction aqueous solution with a stirring blade until the start of the crystallization step. One hour before the start of the crystallization step, the heating of the pre-reaction aqueous solution was stopped and the pre-reaction aqueous solution was allowed to cool down so that the temperature of the pre-reaction aqueous solution would be 40°C when the crystallization step below was started. Bubbling of nitrogen gas was continued during the cooling.

Nitrogen gas was also fed into the stirring tank at a flow rate of 0.01 m$^3$/min for 24 hours, and the atmosphere in the stirring tank was also replaced with a nitrogen atmosphere. The above nitrogen gas fed into the stirring tank was supplied toward the liquid level of the pre-reaction aqueous solution. Even after the start of the following crystallization step, nitrogen gas was continuously fed into the stirring tank to maintain the nitrogen atmosphere.

The pre-reaction aqueous solution just before the start of the crystallization step had a pH value (at 40°C) of 12.3 and a temperature of 40°C. The dissolved oxygen concentration at the start of the crystallization step was 0.1 mg/L or less.

Other than the above, the nickel-containing hydroxide and the positive electrode active material were produced and evaluated under the same conditions as in Example 1.

The composition of the nickel-containing hydroxide obtained was $Ni_{0.5}Mn_{0.3}Co_{0.2}(OH)_2$, and the composition of the positive electrode active material was $Li_{1.0}Ni_{0.5}Mn_{0.3}Co_{0.2}O_2$.

The evaluation results are shown in Table 1.

[Example 3]

In the step of preparing a pre-reaction aqueous solution, the pre-reaction aqueous solution was irradiated with ultrasonic waves and nitrogen gas was fed into the stirring tank at a flow rate of 0.02 m$^3$/min for 24 hours until the crystallization step was started, while stirring the pre-reaction aqueous solution with a stirring blade.

Nitrogen gas was also fed into the stirring tank at a flow rate of 0.01 m$^3$/min for 24 hours, and the atmosphere in the stirring tank was also replaced with a nitrogen atmosphere. The above nitrogen gas fed into the stirring tank was supplied toward the liquid level of the pre-reaction aqueous solution. Even after the start of the following crystallization step, nitrogen gas was continuously fed into the stirring tank to maintain the nitrogen atmosphere.

The pre-reaction aqueous solution just before the start of the crystallization step had a pH value (at 40°C) of 12.3 and a temperature of 40°C. The dissolved oxygen concentration at the start of the crystallization step was 0.1 mg/L or less.

Other than the above, the nickel-containing hydroxide and the positive electrode active material were produced and evaluated under the same conditions as in Example 1.

The composition of the nickel-containing hydroxide obtained was $Ni_{0.5}Mn_{0.3}Co_{0.2}(OH)_2$, and the composition of the positive electrode active material was $Li_{1.0}Ni_{0.5}Mn_{0.3}Co_{0.2}O_2$.

The evaluation results are shown in Table 1.

[Example 4]

The metal salt aqueous solution used in the crystallization step was prepared by adding nickel sulfate, manganese sulfate, and cobalt sulfate to pure water so that the solute concentration, that is, the metal salt concentration, was to be 2 mol/L and the composition of the resulting nickel-containing hydroxide was $Ni_{0.55}Mn_{0.15}Co_{0.30}(OH)_2$. The metal salt aqueous solution was prepared so that the ratio of the amounts of nickel, manganese, and cobalt in the metal salt aqueous solution was to be the above composition.

Other than the above, the nickel-containing hydroxide and the positive electrode active material were produced and evaluated under the same conditions as in Example 1.

The composition of the nickel-containing hydroxide obtained was $Ni_{0.55}Mn_{0.15}Co_{0.30}(OH)_2$, and the composition of the positive electrode active material was $Li_{1.0}Ni_{0.55}Mn_{0.15}Co_{0.30}O_2$.

The evaluation results are shown in Table 1.

[Example 5]

The metal salt aqueous solution used in the crystallization step was prepared by adding nickel sulfate, manganese sulfate, and cobalt sulfate to pure water so that the solute concentration, that is, the metal salt concentration, was to be 2 mol/L and the composition of the resulting nickel-containing hydroxide was $Ni_{0.8}Mn_{0.1}Co_{0.1}(OH)_2$. The metal salt aqueous solution was prepared so that the ratio of the amounts of nickel, manganese, and cobalt in the metal salt aqueous solution was to be the above composition.

Other than the above, the nickel-containing hydroxide and the positive electrode active material were produced and evaluated under the same conditions as in Example 1.

The composition of the resulting nickel-containing hydroxide was $Ni_{0.8}Mn_{0.1}Co_{0.1}(OH)_2$, and the composition of the positive electrode active material was $Li_{1.0}Ni_{0.8}Mn_{0.1}Co_{0.1}O_2$.

The evaluation results are shown in Table 1.

[Example 6]

The nickel-containing hydroxide and the positive electrode active material were produced and evaluated under the same conditions as in Example 1 except that the materials were mixed so that the ratio of Li/Me, which is the ratio of the amount of lithium (Li) to the amount of metal (Me) other than lithium in the raw material mixture in the mixing step, was to be 1.03. The composition of the resulting nickel-containing hydroxide was $Ni_{0.5}Mn_{0.3}Co_{0.2}(OH)_2$, and the composition of the positive electrode active material was $Li_{1.03}Ni_{0.5}Mn_{0.3}Co_{0.2}O_2$. The evaluation results are shown in Table 1.

[Example 7]

The nickel-containing hydroxide and the positive electrode active material were produced and evaluated under the same conditions as in Example 4, except that the materials were mixed so that the ratio of Li/Me, which is the ratio of the amount of lithium (Li) to the amount of metals (Me) other than lithium in the raw material mixture in the mixing step, was to be 1.03. The composition of the resulting nickel-containing hydroxide was $Ni_{0.55}Mn_{0.15}Co_{0.30}(OH)_2$, and the composition of the positive electrode active material was $Li_{1.03}Ni_{0.55}Mn_{0.15}Co_{0.30}O_2$. The evaluation results are shown in Table 1.

[Example 8]

The nickel-containing hydroxide and the positive electrode active material were produced and evaluated under the same conditions as in Example 5, except that the materials were mixed so that the ratio of Li/Me, which is the ratio of the amount of lithium (Li) to the amount of metals (Me) other than lithium in the raw material mixture in the mixing step, was to be 1.03. The composition of the resulting nickel-containing hydroxide was $Ni_{0.8}Mn_{0.1}Co_{0.1}(OH)_2$, and the composition of the positive electrode active material was $Li_{1.03}Ni_{0.8}Mn_{0.1}Co_{0.1}O_2$. The evaluation results are shown in Table 1.

[Example 9]

The nickel-containing hydroxide and the positive electrode active material were produced and evaluated under the same conditions as in Example 1 except that the materials were mixed so that the ratio of Li/Me, which is the ratio of the amount of lithium (Li) to the amount of metal (Me) other than lithium in the raw material mixture in the mixing step, was to be 1.06. The composition of the resulting nickel-containing hydroxide was $Ni_{0.5}Mn_{0.3}Co_{0.2}(OH)_2$, and the composition of the positive electrode active material was $Li_{1.06}Ni_{0.5}Mn_{0.3}Co_{0.2}O_2$. The evaluation results are shown in Table 1.

[Example 10]

The nickel-containing hydroxide and the positive electrode active material were produced and evaluated under the same conditions as in Example 4, except that the materials were mixed so that the ratio of Li/Me, which is the ratio of the amount of lithium (Li) to the amount of metals (Me) other than lithium in the raw material mixture in the mixing step, was to be 1.06. The composition of the resulting nickel-containing hydroxide was $Ni_{0.55}Mn_{0.15}Co_{0.30}(OH)_2$, and the composition of the positive electrode active material was $Li_{1.06}Ni_{0.55}Mn_{0.15}Co_{0.30}O_2$. The evaluation results are shown in Table 1.

[Example 11]

The nickel-containing hydroxide and the positive electrode active material were produced and evaluated under the same conditions as in Example 5, except that the materials were mixed so that the ratio of Li/Me, which is the ratio of the amount of lithium (Li) to the amount of metals (Me) other than lithium in the raw material mixture in the mixing step, was to be 1.06. The composition of the resulting nickel-containing hydroxide was $Ni_{0.8}Mn_{0.1}Co_{0.1}(OH)_2$, and the composition of the positive electrode active material was $Li_{1.06}Ni_{0.8}Mn_{0.1}Co_{0.1}O_2$. The evaluation results are shown in Table 1.

[Comparative Example 1]

In the step of preparing a pre-reaction aqueous solution, nitrogen gas was only fed into a stirring tank at a flow rate of 0.01 $m^3$/min for 1 hour while stirring the pre-reaction aqueous solution with a stirring blade until the crystallization step was started, and the atmosphere in the stirring tank was replaced with a nitrogen atmosphere. The above nitrogen gas fed into the stirring tank was supplied toward the liquid level of the pre-reaction aqueous solution. Even after the start of the crystallization step, nitrogen gas was continuously fed into the stirring tank to maintain the nitrogen atmosphere. However, in the Comparative Example, nitrogen gas is not fed into the solution of the pre-reaction aqueous solution or bubbling.

The pre-reaction aqueous solution just before the start of the crystallization step had a pH value (at 40°C) of 12.3 and a temperature of 40°C. The dissolved oxygen concentration at the start of the crystallization step was 0.2 mg/L.

Other than the above, the nickel-containing hydroxide and the positive electrode active material were produced and evaluated under the same conditions as in Example 1.

The composition of resulting the nickel-containing hydroxide was $Ni_{0.5}Mn_{0.3}Co_{0.2}(OH)_2$, and the composition of the positive electrode active material was $Li_{1.0}Ni_{0.5}Mn_{0.3}Co_{0.2}O_2$.

The evaluation results are shown in Table 1.

[Comparative Example 2]

The metal salt aqueous solution used in the crystallization step was prepared by adding nickel sulfate, manganese sulfate, and cobalt sulfate to pure water so that the solute concentration, that is, the metal salt concentration, was to be 2 mol/L and the composition of the resulting nickel-containing hydroxide was $Ni_{0.55}Mn_{0.15}Co_{0.30}(OH)_2$. The metal salt aqueous solution was prepared so that the ratio of the amounts of nickel, manganese, and cobalt in the metal salt aqueous solution was to be the above composition.

Other than the above, the nickel-containing hydroxide and the positive electrode active material were produced and evaluated under the same conditions as in Comparative Example 1.

The composition of the resulting nickel-containing hydroxide was $Ni_{0.55}Mn_{0.15}Co_{0.30}(OH)_2$, and the composition of the positive electrode active material was $Li_{1.0}Ni_{0.55}Mn_{0.15}Co_{0.30}O_2$.

The evaluation results are shown in Table 1.

[Comparative Example 3]

The metal salt aqueous solution used in the crystallization step was prepared by adding nickel sulfate, manganese sulfate, and cobalt sulfate to pure water so that the solute concentration, that is, the metal salt concentration, was to be 2 mol/L and the composition of the resulting nickel-containing hydroxide was $Ni_{0.8}Mn_{0.1}Co_{0.1}(OH)_2$. The metal salt aqueous solution was prepared so that the ratio of the amounts of nickel, manganese, and cobalt in the metal salt aqueous solution was to be the above composition.

Other than the above, the nickel-containing hydroxide and the positive electrode active material were produced and evaluated under the same conditions as in Comparative Example 1.

The composition of the resulting nickel-containing hydroxide was $Ni_{0.8}Mn_{0.1}Co_{0.1}(OH)_2$, and the composition of the positive electrode active material was $Li_{1.0}Ni_{0.8}Mn_{0.1}Co_{0.1}O_2$.

The evaluation results are shown in Table 1.

[Table 1]

|  | Porosity | Average particle size | Particle size distribution index | Average Crushing Strength | Initial discharge capacity | Capacity retention rate after 10 cycles |
|---|---|---|---|---|---|---|
|  | % | μm | - | MPa | mAh/g | % |
| Example 1 | 8.9 | 4.8 | 0.52 | 121 | 180 | 81 |
| Example 2 | 4.8 | 4.9 | 0.43 | 158 | 185 | 82 |
| Example 3 | 5.2 | 5.0 | 0.46 | 142 | 186 | 80 |
| Example 4 | 8.3 | 4.8 | 0.43 | 115 | 184 | 82 |
| Example 5 | 6.4 | 5.1 | 0.49 | 133 | 192 | 85 |
| Example 6 | 0.50 | 4.8 | 0.50 | 130 | 186 | 83 |
| Example 7 | 0.57 | 4.9 | 0.42 | 127 | 189 | 84 |
| Example 8 | 0.96 | 4.9 | 0.47 | 141 | 198 | 86 |
| Example 9 | 0.42 | 4.9 | 0.49 | 138 | 187 | 83 |
| Example 10 | 0.50 | 4.8 | 0.43 | 132 | 190 | 85 |

(continued)

|  | Porosity | Average particle size | Particle size distribution index | Average Crushing Strength | Initial discharge capacity | Capacity retention rate after 10 cycles |
|---|---|---|---|---|---|---|
|  | % | μm | - | MPa | mAh/g | % |
| Example 11 | 0.82 | 4.8 | 0.48 | 147 | 200 | 86 |
| Comparative Example 1 | 26.7 | 5.0 | 0.50 | 65 | 162 | 76 |
| Comparative Example 2 | 23.1 | 4.8 | 0.44 | 58 | 165 | 76 |
| Comparative Example 3 | 13.6 | 4.9 | 0.51 | 71 | 170 | 79 |

According to Table 1, in Examples 1 to 11 in which the dissolved oxygen concentration in the pre-reaction aqueous solutions at the start of the crystallization step was set to 0.1 mg/L or less, the porosity of lithium-metal composite oxide particles contained in the positive electrode active materials prepared using the nickel-containing hydroxides obtained in the crystallization step was 10% or less. The lithium-metal composite oxide particles contained in the positive electrode active materials obtained in Examples 1 to 11 had an average crushing strength of 100 MPa or more, and it was confirmed that the particles were not easily crushed when preparing electrodes. Examples 6 to 8 in which the ratio of Li/Me was set to be 1.03 and Examples 9 to 11 in which the ratio of Li/Me was set to be 1.06 had even smaller porosity and greater average crushing strength.

On the other hand, in Comparative Examples 1 to 3 in which the dissolved oxygen concentration in the pre-reaction aqueous solution at the start of the crystallization step was set to exceed 0.1 mg/L, it was confirmed that the porosity of lithium metal composite oxide particles contained in the positive electrode active materials prepared using the resulting nickel-containing hydroxide greatly exceeded 10%. In addition, the average crushing strength of the lithium-metal composite oxide particles was below 100 MPa, and it was confirmed that the particles were easily crushed when preparing electrodes, compared with Examples 1 to 11.

When comparing the initial discharge capacities of lithium-ion secondary batteries using the positive electrode active materials, for example, of Examples 1 to 3, Example 6, Example 9, and Comparative Example 1, in which these are of the same composition, it was confirmed that the values of Examples 1 to 3, Example 6, and Example 9 were higher than those of Comparative Example 1. This may be due to the fact that, as described above, in Examples 1 to 3, 6 and 9, the particles were not easily crushed when preparing electrodes. The same is true when comparing Example 4, Example 7, Example 10 with Comparative Example 2, and the same is true when comparing Example 5, Example 8, Example 11 with Comparative Example 3.

As described above, a method of producing a nickel-containing hydroxide, a method of producing a positive electrode active material for a lithium-ion secondary battery, a positive electrode active material for a lithium-ion secondary battery, and a lithium-ion secondary battery are described with reference to the above examples, but the present invention is not limited to the above examples. Various modifications and corrections are possible within the scope of the subject matter of the invention described in the claims.

This application claims priority under Japanese Patent Application No. 2020-124702 filed July 21, 2020, and the entire contents of Japanese Patent Application No. 2020-124702 are incorporated herein by reference.

**Claims**

1. A method of producing a nickel-containing hydroxide comprising:

    a pre-reaction aqueous solution preparation step of preparing a pre-reaction aqueous solution; and
    a crystallization step of obtaining the nickel-containing hydroxide by adding at least a nickel salt as a metal salt, a neutralizing agent that reacts with the metal salt to form a metal hydroxide, and a complexing agent to the pre-reaction aqueous solution while stirring the pre-reaction aqueous solution,
    wherein the pre-reaction aqueous solution contains water and the neutralizing agent, and a concentration of dissolved oxygen in the pre-reaction aqueous solution is 0.1 mg/L or less when the crystallization step starts.

2. The method of producing a nickel-containing hydroxide according to claim 1,

    wherein the nickel-containing hydroxide contains nickel (Ni), manganese (Mn), cobalt (Co), and an element M (M) in a ratio of material amount of Ni: Mn: Co: M = 1-x-y-z: x: y: z, and
    wherein the x is $0.1 \leq x \leq 0.5$, the y is $0 \leq y \leq 1/3$, the z is $0 \leq z \leq 0.1$, and a relationship of $x \leq 1-x-y-z$ is satisfied, and the element M is one or more selected from the group of metals consisting of Mg, Ca, Al, Ti, V, Cr, Zr, Nb, Mo, and W.

3. A method of producing a positive electrode active material for a lithium-ion secondary battery comprising:

    a step of mixing a nickel-containing compound with a lithium compound to prepare a raw material mixture; and
    a step of firing the raw material mixture, wherein the nickel-containing compound is one or more kinds selected from a nickel-containing hydroxide obtained by the method of producing the nickel-containing hydroxide of claim 1 or 2, and an oxidized roasted product of the nickel-containing hydroxide.

4. The method of producing a positive electrode active material for a lithium-ion secondary battery according to claim 3, wherein the nickel-containing compound and the lithium compound are mixed so that a ratio of an amount of lithium (Li) to a total amount of metals other than lithium in the raw material mixture (Me) (ratio of Li/Me) is greater than 1.00 and 1.10 or less in the step of mixing.

5. A positive electrode active material for a lithium-ion secondary battery comprising,

    lithium-metal composite oxide particles including lithium and nickel,
    wherein a porosity of the lithium-metal composite oxide particles is 10% or less.

6. The positive electrode active material for a lithium-ion secondary battery according to claim 5,
   wherein the porosity of the lithium-metal composite oxide particles is 1% or less.

7. The positive electrode active material for a lithium-ion secondary battery according to claim 5 or 6,

    wherein an average particle size is 3 $\mu$m or more and 6 $\mu$m or less, and
    wherein a particle size distribution index calculated by the following formula (A):

$$(\text{Particle size distribution index}) = (D90 - D10)/\text{Volume average particle size} \quad ...(A),$$

    is 0.4 or more and 0.5 or less.

8. The positive electrode active material for a lithium-ion secondary battery according to any one of claims 5 to 7,

    wherein the positive electrode active material for the lithium-ion secondary battery contains lithium (Li), nickel (Ni), manganese (Mn), cobalt (Co), and an element M (M) in a ratio of material amount of Li: Ni: Mn: Co: M = a: 1-x-y-z: x: y: z, and
    wherein the a is $0.95 \leq a \leq 1.10$, the x is $0.1 \leq x \leq 0.5$, the y is $0 \leq y \leq 1/3$, the z is $0 \leq z \leq 0.1$, and a relationship of $x \leq 1-x-y-z$ is satisfied, and the element M is one or more selected from the group of metals consisting of Mg, Ca, Al, Ti, V, Cr, Zr, Nb, Mo, and W.

9. A lithium-ion secondary battery provided with a positive electrode containing the positive electrode active material for the lithium-ion secondary battery of any one of claims 5 to 8.

# FIG.1

## INTERNATIONAL SEARCH REPORT

| | International application No. |
|---|---|
| | PCT/JP2021/026985 |

**A. CLASSIFICATION OF SUBJECT MATTER**
C01G 53/00(2006.01)i; H01M 4/505(2010.01)i; H01M 4/525(2010.01)i
FI: C01G53/00 A; H01M4/525; H01M4/505

According to International Patent Classification (IPC) or to both national classification and IPC

**B. FIELDS SEARCHED**

Minimum documentation searched (classification system followed by classification symbols)
C01G53/00; H01M4/505; H01M4/525

Documentation searched other than minimum documentation to the extent that such documents are included in the fields searched
| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2015-164123 A (SUMITOMO METAL MINING CO., LTD.) 10 September 2015 (2015-09-10) abstract, claims, paragraphs [0012], [0026], [0076]-[0108], [0141]-[0159], [0168], [0169], tables 1, 2, 3, 4 | 1-9 |
| X | WO 2019/117282 A1 (GS YUASA INTERNATIONAL LTD.) 20 June 2019 (2019-06-20) claims, paragraphs [0005]-[0013], [0017]-[0019], [0071]-[0072], [0091]-[0093], [0101], [0105], [0108] | 1-5, 7-9 |
| X | WO 2017/104688 A1 (GS YUASA INTERNATIONAL LTD.) 22 June 2017 (2017-06-22) claims, paragraphs [0008], [0023]-[0024], [0035], [0047]-[0054], [0096]-[0140], [0154]-[0166] | 1-5, 7-9 |
| X | JP 2012-4109 A (SAMSUNG SDI CO., LTD.) 05 January 2012 (2012-01-05) paragraphs [0036]-[0041], [0081], [0083], [0085], [0088], [0099], [0103] | 1-9 |

☒ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 September 2021 (01.09.2021) | 14 September 2021 (14.09.2021) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

| International application No. |
| --- |
| PCT/JP2021/026985 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | JP 2017-84628 A (SUMITOMO METAL MINING CO., LTD.) 18 May 2017 (2017-05-18) paragraphs [0159]-[0181] | 5-9 |
| X | JP 2016-149258 A (JX NIPPON MINING & METALS CORPORATION) 18 August 2016 (2016-08-18) claims, paragraphs [0018], [0032], table 1 | 5, 7-9 |
| X | WO 2014/061579 A1 (NGK INSULATORS, LTD.) 24 April 2014 (2014-04-24) paragraphs [0074]-[0108], tables 1, 2 | 5, 7-9 |
| X | JP 2014-63732 A (JGC CATALYSTS AND CHEMICALS LTD.) 10 April 2014 (2014-04-10) claims, paragraphs [0005]-[0009], [0024]-[0026], [0056]-[0058], [0068], [0097]-[0133], table 1 | 5, 7-9 |

Form PCT/ISA/210 (continuation of second sheet) (January 2015)

## INTERNATIONAL SEARCH REPORT
Information on patent family members

| International application No. |
| --- |
| PCT/JP2021/026985 |

| Patent Documents referred in the Report | Publication Date | Patent Family | Publication Date |
| --- | --- | --- | --- |
| JP 2015-164123 A | 10 Sep. 2015 | (Family: none) | |
| WO 2019/117282 A1 | 20 Jun. 2019 | (Family: none) | |
| WO 2017/104688 A1 | 22 Jun. 2017 | US 2018-0366773 A1 claims, examples 1-9 to 1-12, 2-1 to 2-14, 4-1 to 4-10, tables 1-4 CN 108370036 A | |
| JP 2012-4109 A | 05 Jan. 2012 | US 2011-0305955 A1 comparative examples 2, 4, table 1 KR 10-2011-0136689 A CN 10228036 A | |
| JP 2017-84628 A | 18 May 2017 | US 2019-0020023 A1 examples 1-5, comparative examples 1-5, table 1 CN 108352527 A | |
| JP 2016-149258 A | 18 Aug. 2016 | (Family: none) | |
| WO 2014/061579 A1 | 24 Apr. 2014 | US 2015-0093580 A1 examples 14, 19, 20, tables 1, 2 | |
| JP 2014-63732 A | 10 Apr. 2014 | (Family: none) | |

Form PCT/ISA/210 (patent family annex) (January 2015)

**EP 4 186 867 A1**

**Patent documents cited in the description**

- JP 2012119093 A

- JP 2020124702 A